(19) Europäisches Patentamt
European Patent Office
Office européen des brevets

(11) EP 3 038 281 B1

(12) # EUROPEAN PATENT SPECIFICATION

(45) Date of publication and mention of the grant of the patent:
**14.07.2021 Bulletin 2021/28**

(21) Application number: **14794790.7**

(22) Date of filing: **23.05.2014**

(51) Int Cl.:
***H04W 52/54*** *(2009.01)* ***H04W 52/32*** *(2009.01)*
***H04W 52/42*** *(2009.01)* ***H04L 1/00*** *(2006.01)*

(86) International application number:
**PCT/CN2014/078231**

(87) International publication number:
**WO 2014/180391 (13.11.2014 Gazette 2014/46)**

(54) **METHOD AND SYSTEM FOR CONFIGURING A SOUNDING REFERENCE SIGNAL POWER CONTROL PARAMETER IN A TIME-DIVISION DUPLEXING SYSTEM**

VERFAHREN UND SYSTEM ZUR KONFIGURATION EINES KLANGREFERENZSIGNAL-LEISTUNGSREGELUNGSPARAMETERS IN EINEM ZEITDUPLEXSYSTEM

PROCEDE ET SYSTEME POUR CONFIGURER UN PARAMETRE DE COMMANDE DE PUISSANCE DE SIGNAL DE REFERENCE DE SONDAGE DANS UN SYSTEME A DUPLEXAGE PAR REPARTITION TEMPORELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2013 CN 201310452516**

(43) Date of publication of application:
**29.06.2016 Bulletin 2016/26**

(73) Proprietor: **ZTE Corporation**
**Shenzhen, Guangdong 518057 (CN)**

(72) Inventors:
- **HAO, Peng**
**Shenzhen**
**Guangdong 518057 (CN)**
- **LI, Weimin**
**Shenzhen**
**Guangdong 518057 (CN)**

(74) Representative: **Iannone, Carlo Luigi et al**
**Barzanò & Zanardo Milano S.p.A.**
**Via Borgonuovo, 10**
**20121 Milano (IT)**

(56) References cited:
**WO-A1-2013/047129**
**WO-A1-2013/060306**
**WO-A1-2013/139245**
**WO-A2-2010/124241**
**WO-A2-2011/155711**
**CN-A- 103 327 594**
**CN-A- 103 327 597**

- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 038 281 B1

## Description

### Technical Field

The present invention relates to the field of communications, and more particularly, relates to a method for determining power control parameters of sounding reference signals in a time division duplex system.

### Background of the Invention

FIG. 1 is a schematic diagram of a frame structure of a time division duplex (TDD) mode in the LTE system (Note: the frame structure is also called a frame structure type 2). In this frame structure, a 10ms (307200 Ts, 1ms = 30720 Ts) radio frame is divided into two half-frames, and the length of each half-frame is 5ms (153600Ts). Each half-frame comprises 5 1ms subframes, and the role of each sub-frame is as shown in Table 1, wherein D denotes a downlink subframe used for transmitting downlink signals, U denotes an uplink subframe (or called a common uplink subframe) used for transmitting uplink signals, S denotes a special subframe. In addition, one uplink or downlink subframe comprises two 0.5ms time slots, the special subframe comprises three special time slots, namely a Downlink Pilot Time Slot (referred to as DwPTS), a Guard Period (referred to as GP) and an Uplink Pilot Time Slot (referred to as UpPTS).

Table 1

| Configuration | Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

The resource allocation in the LTE system takes a Physical Resource Block (PRB, or simply a Resource Block) as the unit. As shown in FIG. 2, one PRB occupies 12 subcarriers (also known as Resource Elements (REs), and the bandwidth of each RE is 15kHz) in the frequency domain, and occupies one time slot in the time domain. For the Normal cyclic prefix (referred to as Normal CP), one time slot comprises 7 SC-FDMA (Single Carrier - Frequency Division Multiple Access) symbols; for the Extended cyclic prefix (Extended CP), one time slot comprises 6 SC-FDMA symbols. If the total number of RBs corresponding to the uplink system bandwidth in the frequency domain is $N_{RB}^{UL}$, then the RB indexes are $0,\ 1,\ ...,\ N_{RB}^{UL}\text{-}1,$ and the RE indexes are $0,\ 1,\ ...,\ N_{RB}^{UL}\cdot N_{SC}^{RB}\text{-}1,$ wherein, $N_{SC}^{RB}$ is the number of subcarriers corresponding to one RB in the frequency domain.

The Sounding Reference Signal (SRS) is used for the uplink channel measurement, to achieve the link adaptation and power control of the PUSCH (Physical Uplink Shared Channel).

The SRS has two trigger types, respectively a trigger type 0 and a trigger type 1. The trigger type 0 is triggered via the upper-layer signaling and supports to transmit the SRS in a periodic way. The trigger type 1 is triggered via the physical layer signaling and supports to transmit the SRS in a non-periodic way. The base station reserves some resources for transmitting the trigger type 1 SRS. After a terminal receives a trigger signaling of the physical layer in the subframe n, the trigger type 1 SRS is transmitted in the subframe n+k, wherein k>=4, and n+k is an uplink sub-frame comprising the trigger type1 SRS.

The SRS resource configuration parameters mainly include: a time domain parameter, a frequency domain parameter, and a code domain parameter:

- The time domain parameter specifies the time-domain location of the SRS, mainly including the SRS period and subframe offset. Wherein the cell (i.e. the cell specific) period and subframe offset specifies a time domain location where the SRS may occur in a certain cell; the terminal (i.e. the UE specific or User Equipment specific) period and subframe offset specifies a time domain location of a certain UE where the SRS may occur within a cell. The time domain location of the UE specific SRS of a certain UE within a cell is a subset of the time domain location of the cell specific SRS of the cell.

Table 1 is the cell specific SRS period and subframe offset configuration in the LTE TDD mode. Table 2 is the trigger type0 UE specific SRS period and subframe offset configuration in the LTE TDD mode. Table 3 is the trigger type1 UE specific SRS period and subframe offset configuration in the LTE TDD mode.

Table 1

| **srs-SubframeC onfig** | **Binary** | **Configuration Pe riod $T_{SFC}$ (subframes)** | **Transmissi on offset $\Delta_{SFC}$ (subframes)** |
|---|---|---|---|
| 0 | 0000 | 5 | {1} |
| 1 | 0001 | 5 | {1, 2} |
| 2 | 0010 | 5 | {1, 3} |
| 3 | 0011 | 5 | {1, 4} |
| 4 | 0100 | 5 | {1, 2, 3} |
| 5 | 0101 | 5 | {1, 2, 4} |
| 6 | 0110 | 5 | {1, 3, 4} |
| 7 | 0111 | 5 | {1, 2, 3, 4} |
| 8 | 1000 | 10 | {1, 2, 6} |
| 9 | 1001 | 10 | {1, 3, 6} |
| 10 | 1010 | 10 | {1, 6, 7} |
| 11 | 1011 | 10 | {1, 2, 6, 8} |
| 12 | 1100 | 10 | {1, 3, 6, 9} |
| 13 | 1101 | 10 | {1, 4, 6, 7} |
| 14 | 1110 | Reserved | reserved |
| 15 | 1111 | Reserved | reserved |

Table 2

| **SRS Configuration Index $I_{SRS}$** | **SRS Periodicity $T_{SRS}$ (ms)** | **SRS Subframe Offset $T_{offset}$** |
|---|---|---|
| 0 | 2 | 0, 1 |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |

(continued)

| SRS Configuration Index $I_{SRS}$ | SRS Periodicity $T_{SRS}$ (ms) | SRS Subframe Offset $T_{offset}$ |
|---|---|---|
| 25 - 44 | 20 | $I_{SRS}$ - 25 |
| 45 - 84 | 40 | $I_{SRS}$ - 45 |
| 85 - 164 | 80 | $I_{SRS}$ - 85 |
| 165 - 324 | 160 | $I_{SRS}$ - 165 |
| 325 - 644 | 320 | $I_{SRS}$ - 325 |
| 645 - 1023 | reserved | reserved |

Table 3

| SRS Configuration Index $I_{SRS}$ | SRS Periodicity $T_{SRS,1}$ (ms) | SRS Subframe Offset $T_{offset,1}$ |
|---|---|---|
| 0 | 2 | 0, 1 |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |
| 25 - 31 | reserved | reserved |

NOTE: in Table 2 and Table 3, the SRS Subframe Offset being 0, 1, 5, 6 indicates: when there are two SC-FDMA symbols within the UpPTS, the subframe offset 0 or 5 represents the first SC-FDMA symbol of the UpPTS in the first or second half-frame, the subframe offset 1 or 6 represents the second SC-FDMA symbol of the UpPTS in the first or second half-frame; when there is one SC-FDMA symbol within the UpPTS, the subframe offset 1 or 6 represents the only SC-FDMA symbol of the the UpPTS in the first or second half-frame.

- The frequency domain parameter specifies the frequency domain location of the SRS, mainly including an SRS bandwidth related configuration parameter, a frequency domain starting location, a frequency domain comb configuration, and a frequency hopping parameter;

the SRS bandwidth is configured in a tree structure, i.e., each SRS bandwidth configuration corresponds to one tree structure, as shown in FIG. 3. Wherein, the highest-layer SRS-Bandwidth corresponds to the maximum bandwidth of the SRS bandwidth configuration, Table 4 shows the SRS bandwidth configuration when the uplink system bandwidth is $6 \le N_{RB}^{UL} \le 40$. Take the SRS bandwidth configuration 1 in Table 2 for example, b=0 is the first layer, and it is the highest layer of the tree structure, the SRS bandwidth of the layer is the bandwidth corresponding to 32 PRBs and is the maximum SRS bandwidth of the SRS bandwidth configuration; b=1 is the second layer, the SRS bandwidth of the layer is the bandwidth corresponding to 16 PRBs, and one SRS bandwidth of the first layer is split into two SRS-bandwidths of the second layer; b=2 is the third layer, the SRS bandwidth of the layer is the bandwidth corresponding to 8 PRBs, and one SRS bandwidth of the second layer is split into two SRS bandwidths of the third layer; b=3 is the fourth layer, the SRS bandwidth of the layer is the bandwidth corresponding to four PRBs and one SRS bandwidth of the third layer is split into two SRS bandwidths of the fourth layer. In addition, subcarriers of SRS signals in the same SRS frequency band are spaced, as shown in FIG. 3, this comb structure allows more users to transmit SRS signals in the same SRS bandwidth.

Table 4

| $(6 \leq N_{RB}^{UL} \leq 40)$ | | | | | | | | |
|---|---|---|---|---|---|---|---|---|
| | **SRS-Bandwidth *b* = 0** | | **SRS-Bandwidth *b*=1** | | **SRS-Bandwidth *b* = 2** | | **SRS-Bandwidth *b* = 3** | |
| **SRS bandwidth configuration** | $m_{SRS,b}$ | $N_b$ | $m_{SRS,b}$ | $N_b$ | $m_{SRS,b}$ | $N_b$ | $m_{SRS,b}$ | $N_b$ |
| 0 | 36 | 1 | 12 | 3 | 4 | 3 | 4 | 1 |
| 1 | 32 | 1 | 16 | 2 | 8 | 2 | 4 | 2 |
| 2 | 24 | 1 | 4 | 6 | 4 | 1 | 4 | 1 |
| 3 | 20 | 1 | 4 | 5 | 4 | 1 | 4 | 1 |
| 4 | 16 | 1 | 4 | 4 | 4 | 1 | 4 | 1 |
| 5 | 12 | 1 | 4 | 3 | 4 | 1 | 4 | 1 |
| 6 | 8 | 1 | 4 | 2 | 4 | 1 | 4 | 1 |
| 7 | 4 | 1 | 4 | 1 | 4 | 1 | 4 | 1 |

If the allocated SRS bandwidth is relatively small, the UE can measure channels in a wider bandwidth range through frequency hopping. FIG. 3 is taken as an example, when the allocated bandwidth is in the second layer (i.e. b=1), namely when the SRS bandwidth is 16RB, at the time points t and t+1 of transmitting the SRS, the UE can transmit SRS signals in the left and right two SRS frequency bands respectively.

- The code domain parameter specifies a sequence used by the SRS and a cyclic offset thereof.

In the LTE R11 and previous systems, the following equation is adopted to calculate the SRS transmission power at the time point i:

$$P_{SRS,c}(i) = \min\left\{ P_{CMAX,c}(i),\ P_{SRS_OFFSET,c}(m) + 10\log_{10}(M_{SRS,c}) + P_{O_PUSCH,c}(j) + \alpha_c(j)\cdot PL_c + f_c(i) \right\}$$

wherein,

$P_{CMAX,c}$ ($i$) is the maximum configurable transmission power of the UE;
$P_{SRS_OFFSET,c}$ ($m$) is the power offset parameter (m=0 is the trigger type0, and m=1 is the trigger type1);
$M_{SRS,c}$ is the SRS bandwidth;
$f_c(i)$ is the power control adjustment state of the current PUSCH in the cell c based on the TPC (Transmit Power Control) command. For the cumulative mode, $f_c$ ($i$) = $f_c$ ($i$ -1) + -$\delta_{PUSCH,c}$ ($i$ - $K_{pUSCH}$) ; and for the non-cumulative mode, $f_c$ ($i$) = $\delta_{PUSCH,c}$ ($i$ - $K_{PUSCH}$). $\delta_{PUSCH,c}$ ($i$ - $K_{PUSCH}$) is the TPC command received at the time point $i$ - $K_{PUSCH}$. $P_{O_PUSCH,c}(j)$ and $\alpha_c(j)$ are open loop power control parameters used by the PUSCH; $P_{O_PUSCH,c}$ consists of two parts: $P_{O_NOMINAL_PUSCH,c}$ and $P_{O_UE_PUSCH,c}$, the $P_{O_NOMINAL_PUSCH,c}$ is the cell specific parameter configured by the upper layer in the cell c, and the $P_{O_UE_PUSCH,c}$ is the UE specific parameter configured by the upper layer in the cell c; j corresponds to the grant type of the PUSCH, i.e., j=0 is the semi-persistent grant, j=1 is the dynamic scheduled grant, and j=2 is the random access response grant;
$PL_c$ is the path loss;
Note: See 36.213 for a detailed explanation of the abovementioned equation.

The LTE R12 TDD mode introduced the dynamic sub-frame technology, wherein the dynamic subframe can flexibly change the transmission direction. When the dynamic sub-frame technology is applied, interference intensities that various uplink subframes (including fixed uplink subframes and dynamic subframes) face are different. Therefore, it needs to divide the uplink sub-frames into a plurality of subframe groups, and the interference faced by each of the subframe groups is withstood by configuring the PUSCH channel of each subframe group with different power control parameters ($P_{O_PUSCH,c}(j)$,$\alpha_c(j)$,$f_c(i)$).

The base station must know the power deviation between the SRS and the PUSCH, so that the reception power of the PUSCH can be estimated by using the measurement result of the SRS, which achieves the power control and link adaptation for the PUSCH. Because the base station does not know the path loss between the base station itself and the terminal, when the PUSCHs of different subframe groups use different $\alpha_c(j)$, if only one set of power control parameters is configured for the SRS, the base station cannot estimate the reception powers of the PUSCH channels in two subframe groups. On the other hand, the power control adjustment states ($f_c(i)$) of the PUSCHs of different subframe groups may be different, and the closed loop power control command may be lost, thus the base station cannot know exactly how many power control adjustment commands has the terminal already received, at this time, it also needs to respectively transmit the SRS signals based on the power control adjustment states of the two subframe groups.

In summary, how to transmit SRS signals based on a plurality of sets of power control parameters is a problem to be solved urgently when it is to achieve the dynamic subframe technology in the LTE TDD mode. The current solution is to use the power control parameters of the subframe group in which the SRS is transmitted, and the disadvantages of this method include:

(1) when all subframes in one subframe group can change their transmission directions and are used for the downlink transmission in a period of time, the channel measurement cannot be achieved based on the power control parameters of the subframe group. When there are uplink data, the uplink transmission cannot be achieved in time in the subframe group;

(2) typically the fixed uplink subframes are grouped into one group, and the flexible subframes are grouped into another group. As shown in FIG. 4, in this case, when the SRS period is greater than or equal to 5ms, it cannot be guaranteed that there are SRS resources within both two subframe groups in many cases; and if the 2ms period is used, the SRS overhead will be greatly increased.

(3) in the LTE TDD mode, the UpPTS can be used to transmit SRS signals, so as to save the ordinary uplink subframe resources for the data transmission. Since the UpPTS is fixedly used for the uplink transmission, it is often allocated to a certain subframe group. At this time, it needs to allocate the SRS resources in the uplink subframes, which increases the overhead.

(4) when transmission directions of all subframes in one subframe group can be changed, it is required to notify the terminal of the transmission directions of dynamic subframes through a signaling in the method, so that when the dynamic subframes are uplink, the SRS using the power control parameters of the subframe group is transmitted.

The document WO2011/155711A2 discloses a method for transmitting an aperiodic sounding reference signal (SRS) in a wireless communication system. The method includes receiving a power offset parameter for an aperiodic SRS set by a base station through an higher layer, setting transmission power of the aperiodic SRS based on the power offset parameter, and transmitting the aperiodic SRS to the BS based on the set transmission power of the aperiodic SRS.

## Summary of the Invention

The present invention discloses a method according to claim 1 or 12 and system according to claim 13 or 14 for configuring power control parameters of sounding reference signals in a time division duplex system, which can better solve the problem of using a plurality of sets of power control parameters to transmit SRS signals. The specific contents comprise that:

Also provided is a method for configuring power control parameters of sounding reference signals in a time division duplex system, applied to a terminal, which comprises:

a terminal determining power control parameters of sounding reference signal SRS resources, and determining transmission power of sounding reference signals according to the power control parameters;

the terminal transmitting the sounding reference signals SRS according to determined transmission power of the sounding reference signals SRS.

Preferably,

the power control parameters comprise at least one of the following: $P_{O_PUSCH,c}$,$\alpha_c$,$f_c$, $P_{O_NOMINAL_PUSCH,c}$ and $P_{O_UE_PUSCH,c}$, wherein, $f_c$ is a power control adjustment state of a current PUSCH in a cell c based on a TPC (Transmit Power Control) command; $P_{O_PUSCH,c}$, $P_{O_NOMINAL_PUSCH,c}$ , $P_{O_UE_PUSCH,c}$ and $\alpha_c$ are power control parameters used by a physical uplink shared channel PUSCH $P_{O_NOMINAL_PUSCH,c}$ is a cell-specific parameter; $P_{O_UE_PUSCH,c}$ is a terminal-specific parameter; and $P_{O_PUSCH,c} = P_{O_NOMINAL_PUSCH,c} + P_{O_UE_PUSCH,c}$.

Preferably,

said determining the transmission power according to the power control parameters comprises one of the following variables or the sum of a plurality of the following variables: $P_{O_PUSCH,c}$ , $\alpha_c \cdot PL_c$, $f_c$, wherein, a unit of $P_{O_PUSCH,c}$ is dBm, and a unit of $f_c$ and $PL_c$ is dB.

Preferably, the SRS resources comprise at least one of the following: a time domain location, a frequency domain location, a frequency domain comb, and a sequence cyclic shift.

Preferably, the terminal determining the power control parameters of the sounding reference signal SRS resources comprises:

the terminal determining the power control parameters according to SRS processes configured by a base station, wherein different SRS processes comprise different SRS resources, and the different SRS resources or different SRS processes correspond to different power control parameters.

Preferably, when there is one SRS process, SRS resources corresponding to the SRS process use same power control parameters.

Preferably, when all subframes for the terminal transmitting the physical uplink shared channel PUSCH belong to one subframe group, a number of the SRS processes is 1.

Preferably, the terminal determining the power control parameters of the sounding reference signal SRS resources comprises:

the terminal determining power control parameters used at different time domain locations.

Preferably, when there are two power control parameters, power control parameters used by the terminal at same frequency domain locations between adjacent frequency hopping periods are different.

Preferably,

in a same hop period, different power control parameters are used alternately between adjacent time domain locations, and/or, different power control parameters are used alternately at corresponding time domain locations in combinations of adjacent two time domain locations in a same frequency hopping period, and/or, same power control parameters are used at each time domain location within a same frequency hopping period.

Preferably, the method is applied when two antennas are utilized to close an antenna selection function.

Preferably, when there are two power control parameters and two antennas are utilized to open an antenna selection function, after alternately using two power control parameters to transmit the SRS at same frequency domain locations in adjacent two frequency hopping periods by using one antenna, the terminal alternately uses two power control parameters to transmit the SRS at same frequency domain locations in another adjacent two frequency hopping periods by using the other antenna.

Preferably,

in a same frequency hopping period, different power control parameters are alternately used between adjacent time domain locations, and/or, different power control parameters are alternately used at corresponding time domain locations in combinations of adjacent two time domain locations in a same frequency hopping period, and/or, same power control parameters are used at each time domain location within a same frequency hopping period.

Preferably, when there are two power control parameters and two antennas are utilized to open an antenna selection function, after alternately using two antennas to transmit the SRS at same frequency domain locations in adjacent two frequency hopping periods by using one power control parameter, the terminal alternately uses two antennas to transmit the SRS at same frequency domain locations in another adjacent two frequency hopping periods by using the other power control parameter.

Preferably,

different antennas are used alternately between adjacent time domain locations in a same frequency hopping period, and/or, different antennas are used alternately at corresponding time domain locations in combinations of adjacent two time domain locations in a same frequency hopping period.

Preferably, the terminal determining power control parameters of sounding reference signal SRS resources comprises:

the terminal determining the power control parameters of the SRS resources according to a signaling indication of the base station.

Preferably, the terminal determining the power control parameters of the SRS resources according to the signaling indication of the base station comprises: the terminal receiving a physical layer signaling from the base station, when the signaling indicatesan SRS resource configuration used by the terminal, the terminal determining power control parameters corresponding to the SRS resource configuration according to an association relationship between SRS resource configurations and power control parameters.

Preferably, the physical layer signaling is a DCI (Downlink Control Information) format 4.

Preferably, the SRS resource configurations comprise at least one of the following: a frequency domain comb configuration, a starting physical resource block index, a period and subframe offset configuration, an SRS bandwidth configuration, a sequence cyclic shift configuration, and a configuration of a number of antenna ports.

Preferably, the SRS resources are used for a trigger type0 SRS and/or a trigger type1 SRS.

Preferably, when the SRS resources are used for the trigger type1 SRS, the terminal determining a time domain location for transmitting the SRS and corresponding power control parameters according to a time domain location of a physical layer trigger signaling.

Preferably, the terminal determining the time domain location for transmitting the SRS according to the time domain location of the physical layer trigger signaling comprises: if the time domain location of the physical layer trigger signaling is a subframe n, the time domain location for transmitting the SRS being n+k, wherein k≥4 and sub frames n+k are uplink subframes comprising the SRS resources.

Preferably,
the uplink subframes comprise fixed uplink subframes and/or uplink subframes converted from dynamic subframes, the dynamic subframes are different subframes in different periods and transmission directions, and the periods are less than 640 milliseconds.

Preferably,
the terminal uses same power configuration parameters in all SRS resources according to the configuration of the base station.

Also provided is a method for configuring power control parameters of sounding reference signals in a time division duplex system, applied to a base station, which comprises: the base station determining power control parameters used by a terminal in SRS resources;
the base station receiving SRS signals according to the power control parameters.

Preferably,
the power control parameters comprise at least one of the following: $P_{O_PUSCH,c}$, $\alpha_c$, $f_c$, $P_{O_NOMINAL_PUSCH,c}$ and $P_{O_UE_PUSCH,c}$, wherein, $f_c$ is a power control adjustment state of a current PUSCH in a cell c based on a TPC (Transmit Power Control) command; $P_{O_PUSCH,c}$, $P_{O_NOMINAL_PUSCH,c}$ , $P_{O_UE_PUSCH,c}$ and $\alpha_c$ are power control parameters used by the physical uplink shared channel PUSCH. $P_{O_NOMINAL_PUSCH,c}$ is a cell-specific parameter; $P_{O_UE_PUSCH,c}$ is a terminal-specific parameter; and $P_{O_PUSCH,c} = P_{O_NOMINAL_PUSCH,c} + P_{O_UE_PUSCH,c}$.

Preferably,
determining transmission power according to the power control parameters comprises one of the following variables or the sum of a plurality of the following variables: $P_{O-PUSCH,c}$, $\alpha_c \cdot PL_c$, $f_c$, wherein, a unit of $P_{O_PUSCH,c}$ is dBm, and a unit of $f_c$ and $PL_c$ is dB.

Preferably, the SRS resources comprise at least one of the following: a time domain location, a frequency domain location, a frequency domain comb, and a sequence cyclic shift.

Preferably, the base station determining the power control parameters used by the terminal in the SRS resources comprises:
the base station configuring SRS processes for the terminal, wherein different SRS processes comprise different SRS resources, and the different SRS resources or the different SRS processes correspond to different power control parameters.

Preferably, when there is one SRS process, the SRS resources corresponding to the SRS process use same power control parameters.

Preferably, when all subframes for the terminal transmitting the physical uplink shared channel PUSCH belong to one subframe group, there is one SRS process.

Preferably, the base station determining the power control parameters used by the terminal in the SRS resources comprises:
the base station determining the power control parameters used by the terminal at different time domain locations.

Preferably, when there are two power control parameters, the power control parameters used by the terminal at same frequency domain locations in adjacent frequency hopping periods are different.

Preferably,
in a same frequency hopping period, different power control parameters are used alternately in adjacent time domain locations, and/or, different power control parameters are used alternately at corresponding time domain locations in combinations of adjacent two time domain locations in a same frequency hopping period, and/or, same power control parameters are used at each time domain location within a same frequency hopping period.

Preferably, the method is applied when two antennas are utilized to close an antenna selection function.

Preferably, when there are two power control parameters and two antennas are utilized to open an antenna selection function, after alternately using two power control parameters to transmit the SRS at same frequency domain locations in adjacent two frequency hopping periods by using one antenna, the terminal alternately uses two power control parameters to transmit the SRS at same frequency domain locations in another adjacent two frequency hopping periods by using the other antenna.

Preferably,
in a same frequency hopping period, different power control parameters are alternately used at adjacent time domain locations, and/or, different power control parameters are alternately used at corresponding time domain locations in combinations of adjacent two time domain locations in a same frequency hopping period, and/or, same power control parameters are used at each time domain location within a same frequency hopping period.

Preferably, when there are two power control parameters and two antennas are utilized to open an antenna selection function, after alternately using two antennas to transmit the SRS at same frequency domain locations in adjacent two frequency hopping periods by using one power control parameter, the terminal alternately uses two antennas to transmit the SRS at same frequency domain locations in another adjacent two frequency hopping periods by using the other power control parameter.

Preferably,
different antennas are used alternately at adjacent time domain locations in a same frequency hopping period, and/or, different antennas are used alternately at corresponding time domain locations in combinations of adjacent two time domain locations in a same frequency hopping period.

Preferably, the base station determining power control parameters used by the terminal in the SRS resources comprises:
the base station indicates the terminal to determine the power control parameters of the SRS resources through a signaling.

Preferably, the base station indicating the terminal to determine the power control parameters of the SRS resources through the signaling comprises: the base station transmitting a physical layer signaling to the terminal, when the signaling indicates an SRS resource configuration used by the terminal, the terminal determining power control parameters corresponding to the SRS resource configuration according to an association relationship between SRS resource configurations and power control parameters.

Preferably, the physical layer signaling is a DCI (Downlink Control Information) format 4.

Preferably,
the SRS resource configurations comprise at least one of the following: a frequency domain comb configuration, a starting physical resource block index, a period and subframe offset configuration, an SRS bandwidth configuration, a cyclic shift configuration, and a configuration of a number of antenna ports.

Preferably, the SRS resources are used for a trigger type0 SRS and/or a trigger type1 SRS.

Preferably,
when the SRS resources are used for the trigger type1 SRS, the base station determines a time domain location for transmitting the SRS and corresponding power control parameters according to a time domain location of the physical layer trigger signaling.

Preferably, the base station determining the time domain location for transmitting the SRS base on the time domain location of the physical layer trigger signaling comprises: if the time domain location of the physical layer trigger signaling is a subframe n, the time domain location for transmitting the SRS being n+k, wherein k≥4 and subframes n+k are uplink subframes comprising the SRS resources.

Preferably, the uplink subframes comprise fixed uplink subframes and/or uplink subframes converted from dynamic subframes, the dynamic subframes may be different subframes in different periods and transmission directions, and the periods are less than 640 milliseconds.

Preferably,
the base station uses same power configuration parameters in all SRS resources through a signaling configuration.

Also provided is a system for configuring power control parameters of sounding reference signals in a time division duplex system, applied to a terminal, which comprises:

a power control parameter determining module, configured to: determine power control parameters of sounding reference signal SRS resources;

a transmission power determining module, configured to: determine transmission power of the sounding reference signals according to the power control parameters;

a transmitting module, configured to: transmit the sounding reference signals SRS according to determined transmission power of the sounding reference signals SRS.

Also provided is a system for configuring power control parameters of sounding reference signals in a time division duplex system, applied to a base station, which comprises:

a power control parameter determining module, configured to: determine power control parameters used by a terminal in SRS resources;

a receiving module, configured to: receive SRS signals according to the power control parameters.

The beneficial effects of the embodiments of the present invention are that:

(1) the flexibility is better, and the uplink resource utilization rate can be improved. Based on the method proposed in the present invention, the SRS using different power control parameters can be transmitted in any uplink subframes (including fixed uplink subframes, dynamic subframes and UpPTS), and it is not required that the SRS period be less than 5ms. When the SRS is transmitted in the UpPTS, the uplink sub frame resources can be saved for data transmission. When the SRS period is greater than 5ms, the SRS overhead can be reduced.

(2) when the transmission direction of the subframes is changed, the transmission of SRS with different power control parameters and the corresponding channel measurement are not affected, which ensures the PUSCH power control and link adaptation performance of each sub frame group.

(3) the method provided in the embodiments of the present invention supports to transmit the SRS in fixed uplink subframes for different power control parameters, thus the dependence on the subframe transmission direction related signaling is not high.

## Brief Description of the Drawings

FIG. 1 is a schematic diagram of a frame structure of a TDD mode in an LTE system;

FIG. 2 is a schematic diagram of the structure of a physical resource block;

FIG. 3 is a schematic diagram of an SRS signal frequency domain configuration;

FIG. 4 is a schematic diagram of working in a traditional method when the SRS period equals to 5ms;

FIG. 5 is a first embodiment (the number of frequency hopping locations is 4);

FIG. 6 is the first embodiment (the number of frequency hopping locations is 3);

FIG. 7 is a schematic diagram of a second embodiment;

FIG. 8 is a schematic diagram of a third embodiment;

FIG. 9 is a schematic diagram of a fourth embodiment;

FIG. 10 is a schematic diagram of a fifth embodiment (the number of frequency hopping locations is 3);

FIG. 11 is a schematic diagram of the fifth embodiment (the number of frequency hopping locations is 2);

FIG. 12 is a schematic diagram of the fifth embodiment (the number of frequency hopping locations is 4);

FIG. 13 is a schematic diagram of a sixth embodiment;

FIG. 14 a schematic diagram of a seventh embodiment (Trigger type0 SRS).

FIG. 15 a schematic diagram of the seventh embodiment (Trigger type1 SRS).

FIG. 16 is a schematic diagram of an eighth embodiment;

FIG. 17 is a schematic diagram of a ninth embodiment (the number of frequency hopping locations is 3);

FIG. 18 is a schematic diagram of the ninth embodiment (the number of frequency hopping locations is 4);

FIG. 19 is a schematic diagram of the tenth embodiment (the number of frequency hopping locations is 3);

FIG. 20 is a schematic diagram of the tenth embodiment (the number of frequency hopping locations is 4);

FIG. 21 is a flow chart of a method (applied to a terminal) in an embodiment of the present invention;

FIG. 22 is a flow chart of a method (applied to a base station) in an embodiment of the present invention;

FIG. 23 is a block diagram of a system (applied to the terminal) in an embodiment of the present invention.

FIG. 24 is a block diagram of a system (applied to the terminal) in an embodiment of the present invention.

## Preferred Embodiments of the Invention

Hereinafter, the present invention will be described in detail in conjunction with the accompanying drawings.

### Method Embodiment

The embodiment of the present invention discloses a method for configuring power control parameters of sounding reference signals in a time division duplex system, respectively applied to a terminal and a base station, as shown in FIG. 21 and FIG. 22:
A method for configuring power control parameters of sounding reference signals in a time division duplex system, applied to a terminal, including:

S01. The terminal determines power control parameters of sounding reference signal SRS resources, and determines transmission power of sounding reference signals according to the power control parameters.

S02. The terminal transmits the sounding reference signals SRS according to the determined transmission power of the sounding reference signals SRS.

A method for configuring power control parameters of sounding reference signals in a time division duplex system, applied to a base station, including:

S11. The base station determines power control parameters used by the terminal in the SRS resources.

S12. The base station receives the SRS signals according to the power control parameters.

### The first embodiment

One power control parameter consists of $P_{O_PUSCH,c}$, $\alpha_c$ and $f_c$. There are two power control parameters in total, respectively a power control parameter 1: < $P^1_{O_PUSCH,c}$ , $\alpha_c^1$, $f_c^1$ > and a power control parameter 2: < $P^2_{O_PUSCH,c}$, $\alpha_c^2$, $f_c^2$>.
Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P2_{O_PUSCH,c}$ may have different $P_{O_NOMINAL_PUSCH,c}$ , or different $P_{O_UEPUSCH,c}$, or different $P_{O_NOMINAL_PUSCH,c}$ and $P_{O_UE_PUSCH,c}$.
SRS resources refer to: time domain location and/or frequency domain location. Different SRS resources using different power control parameters refers to using different power control parameters at different time domain locations and/or frequency domain locations. The SRS resources are within the UpPTS, and two symbols within one UpPTS are used for the SRS (2ms period) and the SRS resources are used for the Trigger type0 SRS.
FIG. 5 shows the case of alternately using the power control parameters 1 and 2 in each frequency hopping period (in FIG. 5, 4 SC-FDMA symbols is one frequency hopping period) when there are 4 frequency hopping locations: the power control parameters used by the terminal at the same frequency domain locations in adjacent frequency hopping periods are different. The same power control parameters are used at each time domain location within a same frequency hopping period.
FIG. 6 shows the case of alternately using the power control parameters 1 and 2 in each frequency hopping period (in FIG. 6, 3 SC-FDMA symbols is one frequency hopping period) when there are 3 frequency hopping locations:

the power control parameters used by the terminal at the same frequency domain locations in adjacent frequency hopping periods are different. The same power control parameters are used at each time domain location within a same frequency hopping period.

### The second embodiment

One power control parameter consists of $\alpha_c$ and $f_c$. There are two power control parameters in total, respectively a power control parameter 1: < $\alpha_c^1$, $f_c^1$ > and a power control parameter 2: <$\alpha_c^2$, $f_c^2$>.

SRS resources refer to: time domain location and/or frequency domain location. Different SRS resources using different power control parameters refers to using different power control parameters at different time domain locations and/or frequency domain locations.

It is assumed that the Trigger type0 SRS is transmitted in the subframes 2 and 7.

FIG. 7 shows the case of alternately using the power control parameters 1 and 2 in each frequency hopping period when there are 3 frequency hopping locations: the power control parameters used by the terminal at the same frequency domain locations in adjacent frequency hopping periods are different. The same power control parameters are used at each time domain location in a same frequency hopping period.

### The third embodiment

One power control parameter consists of $P_{O_PUSCH,c}$ and $\alpha_c$. There are two power control parameters in total, respectively a power control parameter 1: <$P^1_{O_PUSCH,c}$, $\alpha_c^1$> and a power control parameter 2: < $P^2_{O_PUSCH,c}$, $\alpha_c^2$>.

Note: $P_{O_PUSCH,c}$ consists of two parts: $P_{O_NOMINAL_PUSCH,c}$ and $P_{O_UEPUSCH,c}$. Therefore, $P^1_{O_PUSCH,c}$ and $P^2_{O_PUSCH,c}$ may have different $P_{O_NOMINAL_PUSCH,c}$ , or different $P_{O_UE_PUSCH,c}$, or different $P_{O_NOMINAL_PUSCH,c}$ and $P_{O_UE_PUSCH,c}$.

2 SRS processes are configured. Time domain locations of the two SRS processes are different (individually configured through the period and subframe offset) and frequency domain locations are different (individually configured through the frequency domain starting PRB and/or frequency hopping parameters).

As shown in FIG. 8, for the Trigger type0 SRS, it is assumed that the period of the process 1 is 5ms and the subframe offset is 0; the period of the process 2 is 5ms and the subframe offset is 2; the process 1 uses the power control parameter 1 and the process 2 uses the power control parameter 2.

In addition, the processes 1 and 2 may also use different frequency domain combs, for example, the process 1 uses a frequency domain comb configuration 0 and the process 2 uses a frequency domain comb configuration 1; the processes 1 and 2 may also use different cyclic shifts, for example, the process 1 uses a cyclic shift 0 and the process 2 uses a cyclic shifts 4.

### The fourth embodiment

One power control parameter consists of $P_{O_PUSCH,c}$ and $\alpha_c$. There are three power control parameters in total, respectively a power control parameter 1: <$P^1_{O_PUSCH,c}$, $\alpha_c^1$>, a power control parameter 2: < $P^2_{O_PUSCH,c}$ , $\alpha_c^2$ >; and a power control parameter 3: < $P^3_{O__PUSCH,c}$, $\alpha_c^3$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$, $P^1_{O_PUSCH,c}$ and $P^3_{O_PUSCH,c}$ may have different $P_{O_NOMINAL_PUSCH,c}$, or different $P_{O_UE_PUSCH,c}$ , or different $P_{O_NOMINAL_PUSCH,c}$ and $P_{O_UE_PUSCH,c}$.

3 SRS processes are configured. Time domain locations of the three SRS processes are different (individually configured through the period and sub frame offset).

As shown in FIG. 9, for the Trigger type0 SRS, it is assumed that the period of the process 1 is 5ms, and the subframe offset is 0; the period of the process 2 is 5ms, and the subframe offset is 2; the period of the process 3 is 10ms, and the subframe offset is 1; the processes 1, 2 and 3 respectively use the power control parameters 1, 2 and 3.

### The fifth embodiment

One power control parameter consists of $P_{OPUSCH,c}$ and $f_c$. There are two power control parameters in total, respectively a power control parameter 1: <$P^1_{O_PUSCH,c}$, $f_c^1$> and a power control parameter 2: < $P^2_{O_PUSCH,c}$, $f_c^2$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P^2_{O_PUSCH,c}$ may have different $P_{O_NOMINAL_PUSCH,c}$, or different $P_{O_UE_PUSCH,c}$, or different $P_{O_NOMINAL_PUSCH,c}$ and $P_{O_UE_PUSCH,c}$.

SRS resources refer to: time domain location and/or frequency domain location. Different SRS resources using different power control parameters refers to using different power control parameters at different time domain locations and/or frequency domain locations.

It is assumed that the Tigger type0 SRS is transmitted in the UpPTS, and two symbols within one UpPTS are used for the SRS (2ms period).

FIG. 10 shows the case of using different power control parameters at adjacent SRS transmission time points when there are 3 frequency domain hopping locations: the power control parameters used by the terminal at the same frequency domain locations in the adjacent frequency hopping periods are different; within a same frequency hopping period, different power control parameters are used alternately between adjacent time domain locations.

FIG. 11 shows the case of alternately using the same or different power control parameters at adjacent SRS transmission time points when there are 2 frequency domain hopping locations: the power control parameters used by the terminal at the same frequency domain locations between the adjacent frequency hopping periods are different; different power control parameters are alternately used between adjacent time domain locations in a same frequency hopping period. It is also equivalent to: different power control parameters being alternately used at the corresponding time domain locations in the combinations of two adjacent time domain locations within a same frequency hopping period (the number of combinations of adjacent locations within one frequency hopping period is 1).

FIG. 12 shows the case of alternately using the same or different power control parameters at adjacent SRS transmission time points when there are four frequency domain hopping locations: the power control parameters used by the terminal at the same frequency domain locations in adjacent frequency hopping periods are different; within a same frequency hopping period, different power control parameters are alternately used at corresponding time domain locations in the combinations of adjacent two time domain locations within a same frequency hopping period (the number of combinations of adjacent locations within one frequency hopping period is 2).

**The sixth embodiment**

One power control parameter consists of $P_{O_PUSCH,c}$ and $f_c$. There are two power control parameters in total, respectively a power control parameter 1: <$P^1_{O_PUSCH,c}$, $f_c^1$> and a power control parameter 2: <$P^2_{O_PUSCH,c}$, $f_c^2$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P^2_{O_PUSCH,c}$ may have different $P_{O_NOMINAL_PUSCH,c}$, or different $P_{O_UE_PUSCH,c}$, or different $P_{O_NOMINAL_PUSCH,c}$ and $P_{O_UE_PUSCH,c}$.

Determining the power control parameters used by the SRS resources according to the signaling indication can be implemented specifically by means of:
the base station configuring the terminal with 3 SRS configurations, respectively:

an SRS configuration 1: the frequency domain comb configuration is 0; the starting physical resource block index is 0; the period and subframe offset configuration is 10 (see Table 3, the period is 5ms, and the subframe configuration is 0);

an SRS configuration 2: the frequency domain comb configuration is 1; the starting physical resource block index is 0; the period and subframe offset configuration is 10 (see Table 3, the period is 5ms, and the subframe configuration is 0);

an SRS configuration 3: the frequency domain comb configuration is 0; the starting physical resource block index is 0; the period and subframe offset configuration is 14 (see Table 3, the period is 5ms, and the subframe configuration is 4);

the SRS bandwidth configuration, the cyclic shift configuration and the configuration of the number of antenna ports of the three SRS configurations are all the same.

The SRS configurations 1 and 3 correspond to the power control parameter 1; the SRS configuration 2 corresponds to the power control parameter 2.

As shown in FIG. 13, when the signaling indicates to transmit the SRS configurations 1 and 3, the power control parameter 1 is used to transmit the SRS; when the signaling indicates to transmit the SRS configuration 2, the power control parameter 2 is used to transmit the SRS;
the timing relationship between the signaling and the SRS transmission location is: the time domain location of the signaling is the subframe n, then the time domain location for transmitting the SRS is n+k, wherein k>= 4 and the subframes n+k are uplink subframes containing specific SRS configuration resources.

**The seventh embodiment**

One power control parameter consists of $P_{O_PUSCH,c}$, $\alpha_c$ and $f_c$. There are two power control parameters in total, respectively a power control parameter 1: < $P^1_{O_PUSCH,c}$, $\alpha_c^1$, $f_c^1$> and a power control parameter 2: < $P^2_{O_PUSCH,c}$, $\alpha_c^2$, $f_c^2$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P^2_{O_PUSCH,c}$ may have different $P_{O_NOMINAL_PUSCH,c}$ , or different $P_{O_UE_PUSCH,c}$, or different $P_{O_NOMINAL_PUSCH,c}$ and $P_{O_UE_PUSCH,c}$.

SRS resources refer to: time domain location. Different SRS resources using different power control parameters refers to using different power control parameters at different time domain locations.

The SRS resources are within the UpPTS, and the period is 5ms, the first symbol within the UpPTS is used for the SRS and the SRS resources are used for the Trigger type1 SRS or the Trigger type0 SRS.

FIG. 14 shows the case of alternately using the power control parameters 1 and 2 in each time domain position for the Trigger type0 SRS.

FIG. 15 shows the case of alternately using the power control parameters 1 and 2 at each possible time domain location for the Trigger type1 SRS. Wherein, the timing relationship between the trigger command of the Trigger type1 SRS and the actual SRS transmission location is that: the time domain location of the signaling is a sub frame n, the time domain location for transmitting the SRS is n+k, wherein k>=4 and the subframes n+k are uplink subframes comprising specific SRS configuration resources.

**The eighth embodiment**

One power control parameter consists of $P_{O_PUSCH,c}$ and $\alpha_c$. There are two power control parameters in total, respectively a power control parameter 1: <$P^1_{OPUSCH,c}$, $\alpha_c^1$> and a power control parameter 2: <$P^2_{O_PUSCH,c}$, $\alpha_c^2$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P^2_{O_PUSCH,c}$ may have different $P_{O_NOMINAL_PUSCH,c}$, or different $P_{O_UEPUSCH,c}$, or different $P_{O_NOMINAL_PUSCH,c}$ and $P_{O_UE_PUSCH,c}$.

2 SRS processes are configured. Time domain locations of the two SRS processes are different (individually configured through the period and sub frame offset).

As shown in FIG. 16, for the Trigger type1 SRS, it is assumed that the period of the process 1 is 5ms, and the subframe offset is 0; the period of the process 2 is 5ms, and the subframe offset is 3; the process 1 uses the power control parameter 1 and the process 2 uses the power control parameter 2. Wherein, the timing relationship between the trigger command of the Trigger type1 SRS and the actual SRS transmission location is that: the time domain location of the signaling is a subframe n, the time domain location for transmitting the SRS is n+k, wherein k>=4 and the subframes n+k are uplink subframes containing SRS resources (it may be the SRS resources of the process 1 or the process 2).

In addition, the processes 1 and 2 may also use different frequency domain combs, for example, the process 1 uses a frequency domain comb configuration 0 and the process 2 uses a frequency domain comb configuration 1; the processes 1 and 2 may also use different cyclic shifts, for example, the process 1 uses a cyclic shift 0 and the process 2 uses a cyclic shift 4; the processes 1 and 2 may also use different frequency domain locations (individually configured through the frequency domain starting PRB and/or the frequency hopping parameter); the processes 1 and 2 may also use different bandwidths.

**The ninth embodiment**

One power control parameter consists of $P_{O_PUSCH,c}$ and $f_c$. There are two power control parameters in total, respectively a power control parameter 1: <$P^1_{O_PUSCH,c}$, $f_c^1$> and a power control parameter 2: <$P^2_{O_PUSCH,c}$, $f_c^2$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P^2_{O_PUSCH,c}$ may have different $P_{O_NOMINAL_PUSCH,c}$ , or different $P_{O_UEPUSCH,c}$, or different $P_{O_NOMINAL_PUSCH,c}$ and $P_{O_UE_PUSCH,c}$.

SRS resources refer to: time domain location and/or frequency domain location. Different SRS resources using different power control parameters refers to using different power control parameters at different time domain locations and/or frequency domain locations.

It is assumed that the Trigger type0 SRS is transmitted within the UpPTS, and two symbols within one UpPTS are used for the SRS (2ms period).

Two antennas are utilized to open an antenna selection function.

FIG. 17 shows the case of, after alternately using two power control parameters to transmit the SRS at the same frequency domain locations in adjacent two frequency hopping periods by using one antenna when there are three frequency domain hopping locations, the terminal alternately using two power control parameters to transmit the SRS at the same frequency domain locations in another adjacent two frequency hopping periods by using the other antenna. Within a same frequency hopping period, different power control parameters are alternately used between adjacent time domain locations.

FIG. 18 shows the case of, after alternately using two power control parameters to transmit the SRS at the same frequency domain locations in adjacent two frequency hopping periods by using one antenna when there are four frequency domain hopping locations, the terminal alternately using two power control parameters to transmit the SRS at the same frequency domain locations in another adjacent two frequency hopping periods by using the other antenna. Within a same frequency hopping period, different power control parameters are alternately used at the corresponding time domain locations in the combinations of adjacent two time domain locations within a same frequency hopping period.

**The tenth embodiment**

One power control parameter consists of $P_{O_PUSCH,c}$ and $f_c$. There are two power control parameters in total, respectively a power control parameter 1: <$P^1_{O_PUSCH,c}$, $f_c^1$> and a power control parameter 2: <$P^2_{O_PUSCH,c}$, $f_c^2$>.

Note: $P_{O_PUSCH,c}$ consists of two parts: $P_{O_NOMINAL_PUSCH,c}$ and $P_{O_UE_PUSCH,c}$. Therefore, $P^1_{O_PUSCH,c}$ and $P^2_{O_PUSCH,c}$ may have different $P_{O_NOMINAL_PUSCH,c}$, or different $P_{O_UEPUSCH,c}$, or different $P_{O_NOMINAL_PUSCH,c}$ and $P_{O_UE_PUSCH,c}$.

SRS resources refer to: time domain location and/or frequency domain location. Different SRS resources using different power control parameters refers to using different power control parameters at different time domain locations and/or frequency domain locations.

It is assumed that the Trigger type0 SRS is transmitted within the UpPTS, and two symbols within one UpPTS are used for the SRS (2ms period).

Two antennas are utilized to open an antenna selection function.

FIG. 19 shows the case of, when there are three frequency domain hopping locations, after alternately using two antennas to transmit the SRS at the same frequency domain locations in adjacent two frequency hopping periods by using one power control parameter, the terminal alternately using two antennas to transmit the SRS at the same frequency domain locations in another two adjacent frequency hopping periods by using the other power control parameter and. Different antennas are alternately used between adjacent time domain locations within a same frequency hopping period.

FIG. 20 shows the case of, when there are four frequency domain hopping locations, after alternately using two antennas to transmit the SRS at the same frequency domain locations in adjacent two frequency hopping periods by using one power control parameter, the terminal alternately using two antennas to transmit the SRS at the same frequency domain locations in another two adjacent frequency hopping periods by using the other power control parameter. Different antennas are alternately used at the corresponding time domain locations in the combinations of adjacent two time domain locations within a same frequency hopping period. (herein, the number of combinations of adjacent locations within one frequency hopping period is 2).

**Apparatus Embodiment**

The embodiment of the present invention discloses a system for configuring power control parameters of sounding reference signals in a time division duplex system, applied to a terminal and a base station, as shown in FIG. 23 and FIG. 24:

a system for configuring power control parameters of sounding reference signals in a time division duplex system, applied to a terminal, including:

- a power control parameter determining module, used to determine power control parameters of sounding reference signal SRS resources;
- a transmission power determining module, used to determine the transmission power of the sounding reference signals according to the power control parameters;
- a transmitting module, used to transmit the sounding reference signals SRS according to the determined transmission power of the sounding reference signals SRS.

A system for configuring power control parameters of sounding reference signals in a time division duplex system, applied to a base station, comprising:

- a power control parameter determining module, used to determine power control parameters used by a terminal in SRS resources;
- a receiving module, used to receive the SRS signals according to the power control parameters.

The above description is only the preferred embodiments of the present invention, and is not intended to limit the present invention. For those people skilled in the field, the present invention may have various modifications and changes.

Industrial Applicability

The beneficial effects of the embodiments of the present invention are:

(1) the flexibility is better, and the uplink resource utilization rate of the TDD mode can be improved. Based on the method proposed in the present invention, the SRS using different power control parameters can be transmitted in any uplink subframes (including fixed uplink subframes, dynamic subframes and UpPTS), and it is not required that the SRS period be less than 5ms. When the SRS is transmitted in the UpPTS, the uplink subframe resources can be saved for data transmission. When the SRS period is greater than 5ms, the SRS overhead can be reduced.
(2) when the transmission direction of the subframes is changed, the transmission of SRS with different power control parameters and the corresponding channel measurement are not affected, which ensures the PUSCH power control and link adaptation performance of each subframe group.
(3) the method provided in the embodiments of the present invention supports to transmit the SRS in fixed uplink subframes for different power control parameters, thus the dependence on the subframe transmission direction related signaling is not high.

## Claims

1. A method for configuring power control parameters of sounding reference signals in a time division duplex system, applied to a terminal, comprising:

   a terminal determining power control parameters of sounding reference signal, SRS, resources, and determining transmission power of sounding reference signals according to the power control parameters (S01);
   the terminal transmitting the SRS according to determined transmission power of the SRS (S02);
   **characterized in that** the terminal determining the power control parameters of the SRS resources comprises:

   the terminal determining the power control parameters according to SRS processes configured by a base station, wherein different SRS processes comprise different SRS resources, and the different SRS resources or different SRS processes correspond to different power control parameters; or,
   when there are two power control parameters, power control parameters used by the terminal at same frequency domain locations in adjacent frequency hopping periods are different; or,
   when there are two power control parameters and two antennas are utilized to start an antenna selection function, after the terminal alternately uses two power control parameters to transmit the SRS at same frequency domain locations in adjacent two frequency hopping periods by using one antenna, the terminal alternately uses two power control parameters to transmit the SRS at same frequency domain locations in another adjacent two frequency hopping periods by using the other antenna; or,
   when there are two power control parameters and two antennas are utilized to start an antenna selection function, after the terminal alternately uses two antennas to transmit the SRS at same frequency domain locations in adjacent two frequency hopping periods by using one power control parameter, the terminal alternately uses two antennas to transmit the SRS at same frequency domain locations in another adjacent two frequency hopping periods by using the other power control parameter; or,
   the terminal receiving a physical layer signaling from the base station, when the signaling indicates an SRS resource configuration used by the terminal, the terminal determining power control parameters corresponding to the SRS resource configuration according to an association relationship between SRS resource configurations and power control parameters; or,
   when the SRS resources are used for the trigger type1 SRS, the terminal determines a time domain location for transmitting the SRS and corresponding power control parameters according to a time domain location of a physical layer trigger signaling.

2. The method of claim 1, wherein,
   the power control parameters comprise at least one of the following: $P_{O_PUSCH,c}$, $\alpha_c$, $f_c$, $P_{O_NOMINAL_PUSCH,c}$ and $P_{O_UE_PUSCH,c}$, wherein, $f_c$ is a power control adjustment state of a current PUSCH in a cell c based on a TPC (Transmit Power Control) command; $P_{O_PUSCH,c}$, $P_{O_NOMINAL_PUSCH,c}$, $P_{O_UE_PUSCH,c}$ and $\alpha_c$ are power control parameters used by a physical uplink shared channel, PUSCH, $P_{O_NOMINAL_PUSCH,c}$ is a cell-specific parameter; $P_{O_UE_PUSCH,c}$ is a terminal-specific parameter; and $P_{O_PUSCH,c} = P_{O_NOMINAL_PUSCH,c} + P_{O_UE_PUSCH,c}$.

**3.** The method of claim 1 or 2, wherein,
said determining the transmission power according to the power control parameters comprises one of the following variables or the sum of a plurality of the following variables: $P_{O_PUSCH,c}$, $\alpha_c \cdot PL_c$, $f_c$, wherein, a unit of $P_{O_PUSCH,c}$ is dBm, and a unit of $f_c$ and $PL_c$ is dB.

**4.** The method of claim 1, wherein the SRS resources comprise at least one of the following: a time domain location, a frequency domain location, a frequency domain comb, and a sequence cyclic shift.

**5.** The method of claim 1, wherein, when there is one SRS process, SRS resources corresponding to the SRS process use same power control parameters.

**6.** The method of claim 5, wherein,
when all subframes for the terminal transmitting the physical uplink shared channel, PUSCH, belong to one subframe group, the number of the SRS processes is 1.

**7.** The method of claim 1, wherein,
different antennas are used alternately between adjacent time domain locations in a same frequency hopping period, and/or, different antennas are used alternately at corresponding time domain locations in combinations of adjacent two time domain locations in a same frequency hopping period.

**8.** The method of claim 1, wherein, the physical layer signaling is a DCI (Downlink Control Information) format 4.

**9.** The method of claim 1, wherein, the SRS resource configurations comprise at least one of the following: a frequency domain comb configuration, a starting physical resource block index, a period and subframe offset configuration, an SRS bandwidth configuration, a sequence cyclic shift configuration and a configuration of the number of antenna ports.

**10.** The method of claim 1, wherein, the terminal determining the time domain location for transmitting the SRS according to the time domain location of the physical layer trigger signaling comprises:
if the time domain location of the physical layer trigger signaling is a subframe n, the time domain location for transmitting the SRS being n+k, wherein $k \geq 4$ and subframes n+k are uplink subframes comprising the SRS resources.

**11.** The method of claim 10, wherein
the uplink subframes comprise fixed uplink subframes and/or uplink subframes converted from dynamic subframes, and the dynamic subframes are subframes with different periods and transmission directions, and the periods arc less than 640 milliseconds.

**12.** A method for configuring power control parameters of sounding reference signals in a time division duplex system, applied to a base station, comprising:

the base station determining power control parameters used by a terminal in SRS resources (S11);
the base station receiving SRS signals according to the power control parameters (S12);
**characterized in that** the base station determining power control parameters used by a terminal in SRS resources comprises:

the base station configuring SRS processes for the terminal, wherein different SRS processes comprise different SRS resources, and the different SRS resources or the different SRS processes correspond to different power control parameters; or,
when there are two power control parameters, the power control parameters used by the terminal at same frequency domain locations in adjacent frequency hopping periods are different; or,
when there are two power control parameters and two antennas are utilized to start an antenna selection function, after the terminal alternately uses two power control parameters to transmit the SRS at same frequency domain locations in adjacent two frequency hopping periods by using one antenna, the terminal alternately uses two power control parameters to transmit the SRS at same frequency domain locations in another adjacent two frequency hopping periods by using the other antenna; or,

when there are two power control parameters and two antennas are utilized to start an antenna selection function, after the terminal alternately uses two antennas to transmit the SRS at same frequency domain locations in adjacent two frequency hopping periods by using one power control parameter, the terminal alternately uses two antennas to transmit the SRS at same frequency domain locations in another adjacent two frequency hopping periods by using the other power control parameter; or,
the base station transmitting a physical layer signaling to the terminal, when the signaling indicates an SRS resource configuration used by the terminal, the terminal determining power control parameters corresponding to the SRS resource configuration according to an association relationship between SRS resource configurations and power control parameters; or,
when the SRS resources are used for the trigger type1 SRS, the base station determines a time domain location for transmitting the SRS and corresponding power control parameters according to a time domain location of a physical layer trigger signaling.

**13.** A system for configuring power control parameters of sounding reference signals in a time division duplex system, applied to a terminal, comprising:

a power control parameter determining module, configured to: determine power control parameters of sounding reference signal, SRS, resources;
a transmission power determining module, configured to: determine transmission power of the sounding reference signals according to the power control parameters;
a transmitting module, configured to: transmit the SRS according to determined transmission power of the SRS;
**characterized in that** the power control parameter determining module determining the power control parameters of the SRS resources comprises:

the power control parameter determining module determining the power control parameters according to SRS processes configured by a base station, wherein different SRS processes comprise different SRS resources, and the different SRS resources or different SRS processes correspond to different power control parameters; or,
when there are two power control parameters, power control parameters used by the terminal at same frequency domain locations in adjacent frequency hopping periods are different; or,
when there are two power control parameters and two antennas are utilized to start an antenna selection function, after the termianl alternately uses two power control parameters to transmit the SRS at same frequency domain locations in adjacent two frequency hopping periods by using one antenna, the terminal alternately uses two power control parameters to transmit the SRS at same frequency domain locations in another adjacent two frequency hopping periods by using the other antenna; or,
when there arc two power control parameters and two antennas arc utilized to start an antenna selection function, after the terminal alternately uses two antennas to transmit the SRS at same frequency domain locations in adjacent two frequency hopping periods by using one power control parameter, the terminal alternately uses two antennas to transmit the SRS at same frequency domain locations in another adjacent two frequency hopping periods by using the other power control parameter; or,
the terminal receiving a physical layer signaling from the base station, when the signaling indicates an SRS resource configuration used by the terminal, the terminal determining power control parameters corresponding to the SRS resource configuration according to an association relationship between SRS resource configurations and power control parameters; or,
when the SRS resources are used for the trigger type1 SRS, the terminal determines a time domain location for transmitting the SRS and corresponding power control parameters according to a time domain location of a physical layer trigger signaling.

**14.** A system for configuring power control parameters of sounding reference signals in a time division duplex system, applied to a base station, comprising:

a power control parameter determining module, configured to: determine power control parameters used by a terminal in SRS resources;
a receiving module, configured to: receive SRS signals according to the power control parameters;
**characterized in that** the power control parameter determining module determining power control parameters used by a terminal in SRS resources comprises:

the base station configuring SRS processes for the terminal, wherein different SRS processes comprise different SRS resources, and the different SRS resources or the different SRS processes correspond to different power control parameters; or,
when there are two power control parameters, the power control parameters used by the terminal at same frequency domain locations in adjacent frequency hopping periods are different; or,
when there are two power control parameters and two antennas are utilized to start an antenna selection function, after the terminal alternately uses two power control parameters to transmit the SRS at same frequency domain locations in adjacent two frequency hopping periods by using one antenna, the terminal alternately uses two power control parameters to transmit the SRS at same frequency domain locations in another adjacent two frequency hopping periods by using the other antenna; or,
when there are two power control parameters and two antennas are utilized to start an antenna selection function, after the terminal alternately uses two antennas to transmit the SRS at same frequency domain locations in adjacent two frequency hopping periods by using one power control parameter, the terminal alternately uses two antennas to transmit the SRS at same frequency domain locations in another adjacent two frequency hopping periods by using the other power control parameter; or,
the base station transmitting a physical layer signaling to the terminal, when the signaling indicates an SRS resource configuration used by the terminal, the terminal determining power control parameters corresponding to the SRS resource configuration according to an association relationship between SRS resource configurations and power control parameters; or,
when the SRS resources are used for the trigger type1 SRS, the base station determines a time domain location for transmitting the SRS and corresponding power control parameters according to a time domain location of a physical layer trigger signaling.

**Patentansprüche**

1. Verfahren zum Konfigurieren von Leistungssteuerungsparametern von klingenden Referenzsignalen in einem Zeitmultiplex-Duplex-System, angewandt auf ein Endgerät, das Folgendes umfasst:

ein Endgerät, das die Leistungssteuerungsparameter der Ressourcen des Lotungsreferenzsignals, SRS, bestimmt und die Sendeleistung der Lotungsreferenzsignale gemäß den Leistungssteuerungsparametern bestimmt (S01);
ein Endgerät sendet die SRS entsprechend der ermittelten Sendeleistung der SRS (S02);
**dadurch gekennzeichnet, dass** das Endgerät, das die Leistungssteuerungsparameter, der SRS-Ressourcen bestimmt, Folgendes umfasst:

das Endgerät, das die Leistungssteuerungsparameter entsprechend den von einer Basisstation konfigurierten SRS-Prozessen bestimmt, wobei unterschiedliche SRS-Prozesse unterschiedliche SRS-Ressourcen umfassen und die unterschiedlichen SRS-Ressourcen oder unterschiedlichen SRS-Prozesse unterschiedlichen Leistungssteuerungsparametern entsprechen; oder,
wenn es zwei Leistungssteuerungsparameter gibt, sind die Leistungssteuerungsparameter, die vom Endgerät an denselben Frequenzbereichsorten in benachbarten Frequenzsprungperioden verwendet werden, unterschiedlich; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Leistungssteuerungsparameter, um die SRS an gleichen Frequenzbereichsorten in weiteren benachbarten zwei Frequenzsprungperiode unter Verwendung der anderen Antenne zu senden; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Leistungssteuerungsparameter, um die SRS an gleichen Frequenzbereichsorten in zwei weiteren benachbarten Frequenzsprungperiode unter Verwendung des anderen Leistungssteuerungsparameters zu senden; oder,
das Endgerät eine Signalisierung der physikalischen Schicht von der Basisstation empfängt, wenn die Signalisierung eine von dem Endgerät verwendete SRS-Ressourcenkonfiguration anzeigt, das Endgerät Leistungssteuerungsparameter entsprechend der SRS-Ressourcenkonfiguration gemäß einer Zuordnungsbeziehung zwischen SRS-Ressourcenkonfiguration und Leistungssteuerungsparameter bestimmt;

oder,
wenn die SRS-Ressourcen für den Trlggertyp1 SRS verwendet werden, bestimmt das Endgerät eine Zeitdomänenposition für die Übertragung des SRS und entsprechende Leistungssteuerungsparameter gemäß einer Zeitdomänenposition einer Triggersignalisierung der physikalischen Schicht.

**2.** Verfahren nach Anspruch 1, wobei,
die Leistungssteuerungsparameter mindestens einen der folgenden umfassen: $P_{O_PUSCH,c}$, $\alpha_c$, $f_c$, $P_{O_NOMINAL_PUSCH,c}$ und $P_{O_UE_PUSCH,c}$, wobei $f_c$ ein Leistungssteuerungseinstellzustand eines aktuellen PUSCH in einer Zelle c ist, der auf einem TPC-Befehl (Transmit Power Control) basiert; $P_{O_PUSCH,c}$, $P_{O_NOMINAL_PUSCH,c}$ $P_{O_UE_PUSCH,c}$ und $\alpha_c$ Leistungssteuerungsparameter sind, die von einem physikalischen Uplink-Shared-Channel, PUSCH, verwendet werden, $P_{O_NOMINAL_PUSCH,c}$ ein zellenspezifischer Parameter ist; $P_{O_UE_PUSCH,c}$ ein endgerätspezifischer Parameter ist; und $P_{O_PUSCH,c} = P_{O_NOMINAL_PUSCH,c} + P_{O_UE_PUSCH,c}$.

**3.** Verfahren nach Anspruch 1 oder 2, wobei,
das Bestimmen der Sendeleistung gemäß den Leistungssteuerungsparametern eine der folgenden Variablen oder die Summe einer Vielzahl der folgenden Variablen umfasst: $P_{O_PUSCH,c}$, $\alpha_c$ $PL_c$, $f_c$, wobei, eine Einheit von $P_{O_PUSCH,c}$ dBm ist, und eine Einheit von $f_c$ und $PL_c$ dB ist.

**4.** Verfahren nach Anspruch 1, wobei die SRS-Ressourcen mindestens eines der folgenden Elemente umfassen: eine Zeitbereichslage, eine Frequenzbereichslage, einen Frequenzbereichskamm und eine zyklische Sequenzverschiebung.

**5.** Verfahren nach Anspruch 1, wobei, wenn es einen SRS-Prozess gibt, die SRS-Ressourcen, die dem SRS-Prozess entsprechen, dieselben Leistungssteuerungsparameter verwenden.

**6.** Verfahren nach Anspruch 5, wobei,
wenn alle Subframes für das Endgerät, das den Physical Uplink Shared Channel, PUSCH, überträgt, zu einer Subframe-Gruppe gehören, die Anzahl der SRS-Prozesse 1 ist.

**7.** Verfahren nach Anspruch 1, wobei,
verschiedene Antennen abwechselnd zwischen benachbarten Zeitbereichsorten in einer gleichen Frequenzsprungperiode verwendet werden, und/oder, verschiedene Antennen abwechselnd an entsprechenden Zeitbereichsorten in Kombinationen von zwei benachbarten Zeitbereichsorten in einer gleichen Frequenzsprungperiode verwendet werden.

**8.** Verfahren nach Anspruch 1, wobei die Signalisierung der physikalischen Schicht ein DCI-Format (Downlink Control Information) 4 ist.

**9.** Verfahren nach Anspruch 1, wobei die SRS-Ressourcenkonfigurationen mindestens eine der folgenden umfassen: eine Frequenzbereichskammkonfiguration, einen physikalischen Start-Ressourcenblockindex, eine Perioden-und Subframe-Offset-Konfiguration, eine SRS-Bandbreitenkonfiguration, eine zyklische Sequenzverschiebungskonfiguration und eine Konfiguration der Anzahl der Antennenports.

**10.** Verfahren nach Anspruch 1, wobei das Endgerät die Zeitdomänenposition für die Übertragung der SRS gemäß der Zeitdomänenposition der Triggersignalisierung der physikalischen Schicht bestimmt, Folgendes umfasst:
wenn der Zeitdomänenort der Triggersignalisierung der physikalischen Schicht ein Subframe n ist, wobei der Zeitdomänenort für die Übertragung der SRS n+k ist, wobei k≥4 und die Subframes n+k Uplink-Subframes sind, die die SRS-Ressourcen umfassen.

**11.** Verfahren nach Anspruch 10, wobei
die Uplink-Subframes feste Uplink-Subframes und/oder aus dynamischen Subframes umgewandelte Uplink-Subframes umfassen, und die dynamischen Subframes Subframes mit unterschiedlichen Perioden und Übertragungsrichtungen sind, und die Perioden einen Bogen von weniger als 640 Millisekunden bilden.

**12.** Verfahren zum Konfigurieren von Leistungssteuerungsparametern von klingenden Referenzsignalen in einem Zeitduplexsystem, das auf eine Basisstation angewendet wird, umfassend:

die Basisstation bestimmt Leistungssteuerungsparameter, die von einem Endgerät in SRS-Ressourcen verwendet werden (S11);
die Basisstation empfängt SRS-Signale gemäß den Leistungssteuerungsparametern (S12);
**dadurch gekennzeichnet, dass** die Basisstation zur Bestimmung von Leistungssteuerungsparametern, die von einem Endgerät in SRS-Ressourcen verwendet werden, umfasst:

die Basisstation SRS-Prozesse für das Endgerät konfiguriert, wobei verschiedene SRS-Prozesse verschiedene SRS-Ressourcen umfassen und die verschiedenen SRS-Ressourcen oder die verschiedenen SRS-Prozesse verschiedenen Leistungssteuerungsparametern entsprechen; oder,
wenn es zwei Leistungssteuerungsparameter gibt, sind die Leistungssteuerungsparameter, die vom Endgerät an gleichen Frequenzbereichsorten in benachbarten Frequenzsprungperioden verwendet werden, unterschiedlich; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Leistungssteuerungsparameter, um die SRS an gleichen Frequenzbereichsorten in weiteren benachbarten zwei Frequenzsprungperiode unter Verwendung der anderen Antenne zu senden; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Antennen, um die SRS an gleichen Frequenzbereichsorten in zwei weiteren benachbarten Frequenzsprungperiode unter Verwendung des anderen Leistungssteuerungsparameters zu senden; oder,
die Basisstation eine Signalisierung der physikalischen Schicht zum Endgerät überträgt, wenn die Signalisierung eine von dem Endgerät verwendete SRS-Ressourcenkonfiguration anzeigt, wobei das Endgerät Leistungssteuerungsparameter, die der SRS-Ressourcenkonfiguration entsprechen, gemäß einer Zuordnungsbeziehung zwischen SRS-Ressourcenkonfigurationen und Leistungssteuerungsparametern bestimmt; oder,
wenn die SRS-Ressourcen für den TrIggertyp1 SRS verwendet werden, bestimmt die Basisstation eine Zeitdomänenposition zum Senden des SRS und entsprechende Leistungssteuerungsparameter gemäß einer Zeitdomänenposition einer Triggersignalisierung der physikalischen Schicht.

**13.** System zum Konfigurieren von Leistungssteuerungsparametern von klingenden Referenzsignalen in einem Zeitmultiplex-Duplex-System, angewandt auf ein Endgerät, umfassend:
ein Modul zur Bestimmung von Leistungssteuerungsparametern, konfiguriert zum:

Bestimmen von Leistungssteuerungsparametern von klingenden Referenzsignal, SRS, Ressourcen;
ein Modul zur Bestimmung der Sendeleistung, das so konfiguriert ist, dass es: die Sendeleistung der klingenden Referenzsignale gemäß den Leistungssteuerungsparametern bestimmt;
ein Sendemodul, das so konfiguriert ist, dass es: die SRS entsprechend der ermittelten Sendeleistung der SRS sendet;
**dadurch gekennzeichnet, dass** das Modul zur Bestimmung der Leistungssteuerungsparameter zur Bestimmung der Leistungssteuerungsparameter der SRS-Ressourcen umfasst:

das Leistungssteuerungsparameter-Bestimmungsmodul, das die Leistungssteuerungsparameter gemäß den von einer Basisstation konfigurierten SRS-Prozessen bestimmt, wobei verschiedene SRS-Prozesse verschiedene SRS-Ressourcen umfassen und die verschiedenen SRS-Ressourcen oder verschiedenen SRS-Prozesse verschiedenen Leistungssteuerungsparametern entsprechen; oder,
wenn es zwei Leistungssteuerungsparameter gibt, sind die Leistungssteuerungsparameter, die vom Endgerät an denselben Frequenzbereichsorten in benachbarten Frequenzsprungperioden verwendet werden, unterschiedlich; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Leistungssteuerungsparameter, um die SRS an gleichen Frequenzbereichsorten in weiteren benachbarten zwei Frequenzsprungperiode unter Verwendung der anderen Antenne zu senden; oder,
wenn es zwei Leistungssteuerungsparameter gibt und zwei Antennen verwendet werden, um eine Antennenauswahlfunktion zu starten, nachdem das Endgerät abwechselnd zwei Antennen verwendet, um die SRS an gleichen Frequenzdomänenorten in zwei benachbarten Frequenzsprungperioden unter Verwendung eines Leistungssteuerungsparameter zu senden, verwendet das Endgerät abwechselnd zwei Antennen, um die SRS an gleichen Frequenzdomänenorten in zwei weiteren benachbarten Frequenzsprungperioden unter Verwendung des anderen Leistungssteuerungsparameters zu senden; oder,
das Endgerät eine Signalisierung der physikalischen Schicht von der Basisstation empfängt, wenn die Signalisierung eine von dem Endgerät verwendete SRS-Ressourcenkonfiguration anzeigt, das Endgerät Leistungssteuerungsparameter entsprechend der SRS-Ressourcenkonfiguration gemäß einer Zuordnungsbeziehung zwischen SRS-Ressourcenkonfiguration und Leistungssteuerungsparameter bestimmt; oder,
wenn die SRS-Ressourcen für den Trlggertyp1 SRS verwendet werden, bestimmt das Endgerät eine Zeitdomänenposition für die Übertragung des SRS und entsprechende Leistungssteuerungsparameter gemäß einer Zeitdomänenposition einer Triggersignalisierung der physikalischen Schicht.

**14.** System zum Konfigurieren von Leistungssteuerungsparametern von klingenden Referenzsignalen in einem Zeitduplexsystem, das auf eine Basisstation angewandt wird, umfassend:
ein Modul zur Bestimmung von Leistungssteuerungsparametern, konfiguriert zum:

Bestimmen von Leistungssteuerungsparametern, die von einem Endgerät in SRS-Ressourcen verwendet werden;
ein Empfangsmodul, konfiguriert zum: Empfangen von SRS-Signalen gemäß den Leistungssteuerungsparametern;
**dadurch gekennzeichnet, dass** das Modul zur Bestimmung von Leistungssteuerungsparametern, das von einem Endgerät in SRS-Ressourcen verwendet wird, Folgendes umfasst:

die Basisstation SRS-Prozesse für das Endgerät konfiguriert, wobei verschiedene SRS-Prozesse verschiedene SRS-Ressourcen umfassen und die verschiedenen SRS-Ressourcen oder die verschiedenen SRS-Prozesse verschiedenen Leistungssteuerungsparametern entsprechen; oder,
wenn es zwei Leistungssteuerungsparameter gibt, sind die Leistungssteuerungsparameter, die vom Endgerät an gleichen Frequenzbereichsorten in benachbarten Frequenzsprungperioden verwendet werden, unterschiedlich; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Leistungssteuerungsparameter, um die SRS an gleichen Frequenzbereichsorten in weiteren benachbarten zwei Frequenzsprungperiode unter Verwendung der anderen Antenne zu senden; oder,
wenn es zwei Leistungssteuerungsparameter gibt und zwei Antennen verwendet werden, um eine Antennenauswahlfunktion zu starten, nachdem das Endgerät abwechselnd zwei Leistungssteuerungsparameter verwendet, um die SRS an gleichen Frequenzbereichsorten in zwei benachbarten Frequenzsprungperiode unter Verwendung einer Antenne zu senden, verwendet das Endgerät abwechselnd zwei Antennen, um die SRS an gleichen Frequenzbereichsorten in zwei weiteren benachbarten Frequenzsprungperiode unter Verwendung des anderen Leistungssteuerungsparameters zu senden; oder,
die Basisstation eine Signalisierung der physikalischen Schicht zum Endgerät überträgt, wenn die Signalisierung eine von dem Endgerät verwendete SRS-Ressourcenkonfiguration anzeigt, wobei das Endgerät Leistungssteuerungsparameter, die der SRS-Ressourcenkonfiguration entsprechen, gemäß einer Zuordnungsbeziehung zwischen SRS-Ressourcenkonfigurationen und Leistungssteuerungsparametern bestimmt; oder,
wenn die SRS-Ressourcen für den Trlggertyp1 SRS verwendet werden, bestimmt die Basisstation eine Zeitdomänenposition zum Senden des SRS und entsprechende Leistungssteuerungsparameter gemäß einer Zeitdomänenposition einer Triggersignalisierung der physikalischen Schicht.

## Revendications

**1.** Procédé de configuration de paramètres de commande de puissance de signaux de référence de sondage dans un système duplex par répartition dans le temps, appliqué à un terminal, comprenant :

la détermination par un terminal de paramètres de commande de puissance de ressources de signal de référence de sondage, SRS, et la détermination d'une puissance de transmission de signaux de référence de sondage en fonction des paramètres de commande de puissance (S01) ;
la transmission par le terminal du SRS en fonction de la puissance de transmission déterminée du SRS (S02) ;
**caractérisé en ce que** la détermination par le terminal des paramètres de commande de puissance des ressources SRS comprend :

la détermination par le terminal des paramètres de commande de puissance en fonction de processus SRS configurés par une station de base, dans lequel des processus SRS différents comprennent des ressources SRS différentes, et les ressources SRS différentes ou les processus SRS différents correspondent à paramètres de commande de puissance différents ; ou
quand il existe deux paramètres de commande de puissance, des paramètres de commande de puissance utilisés par le terminal au niveau des mêmes emplacements de domaine fréquentiel dans des périodes de saut de fréquence adjacentes sont différents ; ou
quand il existe deux paramètres de commande de puissance et deux antennes sont utilisées pour démarrer une fonction de sélection d'antenne, après que le terminal utilise par alternance deux paramètres de commande de puissance pour transmettre le SRS au niveau des mêmes emplacements de domaine fréquentiel dans deux périodes de saut de fréquence adjacentes en utilisant une antenne, le terminal utilise par alternance deux paramètres de commande de puissance pour transmettre le SRS au niveau des mêmes emplacements de domaine fréquentiel dans d'autres deux périodes de saut de fréquence adjacentes en utilisant l'autre antenne ; ou
quand il existe deux paramètres de commande de puissance et deux antennes sont utilisées pour démarrer une fonction de sélection d'antenne, après que le terminal utilise par alternance deux antennes pour transmettre le SRS au niveau des mêmes emplacements de domaine fréquentiel dans deux périodes de saut de fréquence adjacentes en utilisant un paramètre de commande de puissance, le terminal utilise par alternance deux antennes pour transmettre le SRS au niveau des mêmes emplacements de domaine fréquentiel dans d'autres deux périodes de saut de fréquence adjacentes en utilisant l'autre paramètre de commande de puissance ; ou
la réception par le terminal d'une signalisation de couche physique à partir de la station de base, quand la signalisation indique une configuration de ressource SRS utilisée par le terminal, la détermination par le terminal de paramètres de commande de puissance correspondant à la configuration de ressource SRS en fonction d'une relation d'association entre des configurations de ressource SRS et des paramètres de commande de puissance ; ou
quand les ressources SRS sont utilisées pour le SRS de type1 de déclenchement, le terminal détermine un emplacement de domaine temporel pour transmettre les SRS et les paramètres de commande de puissance correspondants en fonction d'un emplacement de domaine temporel d'une signalisation de déclenchement de couche physique.

**2.** Procédé selon la revendication 1, dans lequel,
les paramètres de commande de puissance comprennent au moins un de ce qui suit : $P_{O_PUSCH,c}$, $\alpha_c$, $f_c$, $P_{O_NOMINAL_PUSCH,c}$ et $P_{O_UE_PUSCH,c}$, dans lequel, $f_c$ est un état d'ajustement de commande de puissance d'un PUSCH actuel dans une cellule c sur la base d'une commande TPC (commande de puissance de transmission) ; $P_{O_PUSCH,c}$, $P_{O_NOMINAL_PUSCH,c}$, $P_{O_UE_PUSCH,c}$ et $\alpha_c$ sont des paramètres de commande de puissance utilisés par un canal physique partagé de liaison montante, PUSCH, $P_{O_NOMINAL_PUSCH,c}$ est un paramètre spécifique à la cellule ; $P_{O_UE_PUSCH,c}$ est un paramètre spécifique au terminal ; et $P_{O_PUSCH,c} = P_{O_NOMINAL_PUSCH,c} + P_{O_UE_PUSCH,c}$.

**3.** Procédé selon la revendication 1 ou 2, dans lequel,
ladite détermination de la puissance de transmission en fonction des paramètres de commande de puissance comprend une des variables suivantes ou la somme d'une pluralité des variables suivantes : $P_{O_PUSCH,c}$, $\alpha_c \cdot PL_c$, $f_c$, dans lequel, une unité de $P_{O_PUSCH,c}$ est dBm, et une unité de *fc et* $PL_c$ est dB.

**4.** Procédé selon la revendication 1, dans lequel les ressources SRS comprennent au moins un de ce qui suit : un emplacement de domaine temporel, un emplacement de domaine fréquentiel, un peigne de domaine fréquentiel, et un décalage cyclique de séquence.

**5.** Procédé selon la revendication 1, dans lequel, quand il existe un processus SRS, des ressources SRS correspondant au processus SRS utilisent les mêmes paramètres de commande de puissance.

**6.** Procédé selon la revendication 5, dans lequel, quand toutes les sous-trames pour la transmission par le terminal du canal physique partagé de liaison montante, PUSCH, appartiennent à un groupe de sous-trames, le nombre de processus SRS est 1.

**7.** Procédé selon la revendication 1, dans lequel, des antennes différentes sont utilisées par alternance entre des emplacements de domaine temporel adjacents dans une même période de saut de fréquence, et/ou des antennes différentes sont utilisées par alternance au niveau d'emplacements de domaine temporel correspondants dans des combinaisons de deux emplacements de domaine temporel adjacents dans une même période de saut de fréquence.

**8.** Procédé selon la revendication 1, dans lequel, la signalisation de couche physique est un format 4 de DCI (informations de commande de liaison descendante).

**9.** Procédé selon la revendication 1, dans lequel, les configurations de ressource SRS comprennent au moins un de ce qui suit : une configuration de peigne de domaine fréquentiel, un indice de bloc de ressource physique de départ, une configuration de décalage de sous-trame et de période, une configuration de largeur de bande SRS, une configuration de décalage cyclique de séquence et une configuration du nombre de ports d'antenne.

**10.** Procédé selon la revendication 1, dans lequel, la détermination par le terminal de l'emplacement de domaine temporel pour la transmission du SRS en fonction de l'emplacement de domaine temporel de la signalisation de déclenchement de couche physique comprend :
si l'emplacement de domaine temporel de la signalisation de déclenchement de couche physique est une sous-trame n, l'emplacement de domaine temporel pour la transmission du SRS étant n+k, dans lequel k≥4 et des sous-trames n+k sont des sous-trames de liaison montante comprenant les ressources SRS.

**11.** Procédé selon la revendication 10, dans lequel les sous-trames de liaison montante comprennent des sous-trames de liaison montante fixes et/ou des sous-trames de liaison montante converties à partir de sous-trames dynamiques, et les sous-trames dynamiques sont des sous-trames avec différentes périodes et directions de transmission, et les périodes sont inférieures à 640 millisecondes.

**12.** Procédé de configuration de paramètres de commande de puissance de signaux de référence de sondage dans un système duplex par répartition dans le temps, appliqué à une station de base, comprenant :

la détermination par la station de base de paramètres de commande de puissance utilisés par un terminal dans des ressources SRS (S11) ;
la réception par la station de base de signaux SRS en fonction des paramètres de commande de puissance (S12) ;
**caractérisé en ce que** la détermination par la station de base de paramètres de commande de puissance utilisés par un terminal dans des ressources SRS comprend :

la configuration par la station de base de processus SRS pour le terminal, dans lequel des processus SRS différents comprennent des ressources SRS différentes, et les ressources SRS différentes ou les processus SRS différents correspondent à des paramètres de commande de puissance différents ; ou
quand il existe deux paramètres de commande de puissance, les paramètres de commande de puissance utilisés par le terminal au niveau des mêmes emplacements de domaine fréquentiel dans des périodes de saut de fréquence adjacentes sont différents ; ou
quand il existe deux paramètres de commande de puissance et deux antennes sont utilisées pour démarrer une fonction de sélection d'antenne, après que le terminal utilise par alternance deux paramètres de commande de puissance pour transmettre le SRS au niveau des mêmes emplacements de domaine fréquentiel dans deux périodes de saut de fréquence adjacentes en utilisant une antenne, le terminal utilise par alternance deux paramètres de commande de puissance pour transmettre le SRS au niveau des mêmes emplacements de domaine fréquentiel dans d'autres deux périodes de saut de fréquence adjacentes en utilisant l'autre antenne ; ou
quand il existe deux paramètres de commande de puissance et deux antennes sont utilisées pour démarrer une fonction de sélection d'antenne, après que le terminal utilise par alternance deux antennes pour transmettre le SRS au niveau des mêmes emplacements de domaine fréquentiel dans deux périodes de saut de fréquence adjacentes en utilisant un paramètre de commande de puissance, le terminal utilise par alternance deux antennes pour transmettre le SRS au niveau des mêmes emplacements de domaine fréquentiel dans d'autres deux périodes de saut de fréquence adjacentes en utilisant l'autre paramètre de commande de puissance ; ou

la transmission par la station de base d'une signalisation de couche physique au terminal, quand la signalisation indique une configuration de ressource SRS utilisée par le terminal, la détermination par le terminal de paramètres de commande de puissance correspondant à la configuration de ressource SRS en fonction d'une relation d'association entre des configurations de ressource SRS et des paramètres de commande de puissance ; ou

quand les ressources SRS sont utilisées pour le SRS de type1 de déclenchement, la station de base détermine un emplacement de domaine temporel pour la transmission des SRS et des paramètres de commande de puissance correspondants en fonction d'un emplacement de domaine temporel d'une signalisation de déclenchement de couche physique.

**13.** Système de configuration de paramètres de commande de puissance de signaux de référence de sondage dans un système duplex par répartition dans le temps, appliqué à un terminal, comprenant :

un module de détermination de paramètre de commande de puissance configuré pour : déterminer des paramètres de commande de puissance de ressources de signal de référence de sondage, SRS ;

un module de détermination de puissance de transmission configuré pour : déterminer une puissance de transmission des signaux de référence de sondage en fonction des paramètres de commande de puissance ;

un module de transmission configuré pour : transmettre le SRS en fonction de la puissance de transmission déterminée du SRS ;

**caractérisé en ce que** la détermination par le module de détermination de paramètre de commande de puissance des paramètres de commande de puissance des ressources SRS comprend :

la détermination par le module de détermination de paramètre de commande de puissance des paramètres de commande de puissance en fonction de processus SRS configurés par une station de base, dans lequel des processus SRS différents comprennent des ressources SRS différentes, et les ressources SRS différentes ou les processus SRS différents correspondent à des paramètres de commande de puissance différents ; ou

quand il existe deux paramètres de commande de puissance, des paramètres de commande de puissance utilisés par le terminal au niveau des mêmes emplacements de domaine fréquentiel dans des périodes de saut de fréquence adjacentes sont différents ; ou

quand il existe deux paramètres de commande de puissance et deux antennes sont utilisées pour démarrer une fonction de sélection d'antenne, après que le terminal utilise par alternance deux paramètres de commande de puissance pour transmettre le SRS au niveau des mêmes emplacements de domaine fréquentiel dans deux périodes de saut de fréquence adjacentes en utilisant une antenne, le terminal utilise par alternance deux paramètres de commande de puissance pour transmettre le SRS au niveau des mêmes emplacements de domaine fréquentiel dans d'autres deux périodes de saut de fréquence adjacentes en utilisant l'autre antenne ; ou

quand il existe deux paramètres de commande de puissance et deux antennes sont utilisées pour démarrer une fonction de sélection d'antenne, après que le terminal utilise par alternance deux antennes pour transmettre le SRS au niveau des mêmes emplacements de domaine fréquentiel dans deux périodes de saut de fréquence adjacentes en utilisant un paramètre de commande de puissance, le terminal utilise par alternance deux antennes pour transmettre le SRS au niveau des mêmes emplacements de domaine fréquentiel dans d'autres deux périodes de saut de fréquence adjacentes en utilisant l'autre paramètre de commande de puissance ; ou

la réception par le terminal d'une signalisation de couche physique à partir de la station de base, quand la signalisation indique une configuration de ressource SRS utilisée par le terminal, la détermination par le terminal de paramètres de commande de puissance correspondant à la configuration de ressource SRS en fonction d'une relation d'association entre des configurations de ressource SRS et des paramètres de commande de puissance ; ou

quand les ressources SRS sont utilisées pour le SRS de type1 de déclenchement, le terminal détermine un emplacement de domaine temporel pour transmettre les SRS et les paramètres de commande de puissance correspondants en fonction d'un emplacement de domaine temporel d'une signalisation de déclenchement de couche physique.

**14.** Système de configuration de paramètres de commande de puissance de signaux de référence de sondage dans un système duplex par répartition dans le temps, appliqué à une station de base, comprenant :

un module de détermination de paramètre de commande de puissance configuré pour : déterminer des paramètres de commande de puissance utilisés par un terminal dans des ressources SRS ;
un module de réception configuré pour : recevoir des signaux SRS en fonction des paramètres de commande de puissance ;
**caractérisé en ce que** la détermination par le module de détermination de paramètre de commande de puissance des paramètres de commande de puissance utilisés par un terminal dans des ressources SRS comprend :

la configuration par la station de base de processus SRS pour le terminal, dans lequel des processus SRS différents comprennent des ressources SRS différentes, et les ressources SRS différentes ou les processus SRS différents correspondent à des paramètres de commande de puissance différents ; ou
quand il existe deux paramètres de commande de puissance, les paramètres de commande de puissance utilisés par le terminal au niveau des mêmes emplacements de domaine fréquentiel dans des périodes de saut de fréquence adjacentes sont différents ; ou
quand il existe deux paramètres de commande de puissance et deux antennes sont utilisées pour démarrer une fonction de sélection d'antenne, après que le terminal utilise par alternance deux paramètres de commande de puissance pour transmettre le SRS au niveau des mêmes emplacements de domaine fréquentiel dans deux périodes de saut de fréquence adjacentes en utilisant une antenne, le terminal utilise par alternance deux paramètres de commande de puissance pour transmettre le SRS au niveau des mêmes emplacements de domaine fréquentiel dans d'autres deux périodes de saut de fréquence adjacentes en utilisant l'autre antenne ; ou
quand il existe deux paramètres de commande de puissance et deux antennes sont utilisées pour démarrer une fonction de sélection d'antenne, après que le terminal utilise par alternance deux antennes pour transmettre le SRS au niveau des mêmes emplacements de domaine fréquentiel dans deux périodes de saut de fréquence adjacentes en utilisant un paramètre de commande de puissance, le terminal utilise par alternance deux antennes pour transmettre le SRS au niveau des mêmes emplacements de domaine fréquentiel dans d'autres deux périodes de saut de fréquence adjacentes en utilisant l'autre paramètre de commande de puissance ; ou
la transmission par la station de base d'une signalisation de couche physique au terminal, quand la signalisation indique une configuration de ressource SRS utilisée par le terminal, la détermination par le terminal de paramètres de commande de puissance correspondant à la configuration de ressource SRS en fonction d'une relation d'association entre des configurations de ressource SRS et des paramètres de commande de puissance ; ou
quand les ressources SRS sont utilisées pour le SRS de type1 de déclenchement, la station de base détermine un emplacement de domaine temporel pour transmettre les SRS et les paramètres de commande de puissance correspondants en fonction d'un emplacement de domaine temporel d'une signalisation de déclenchement de couche physique.

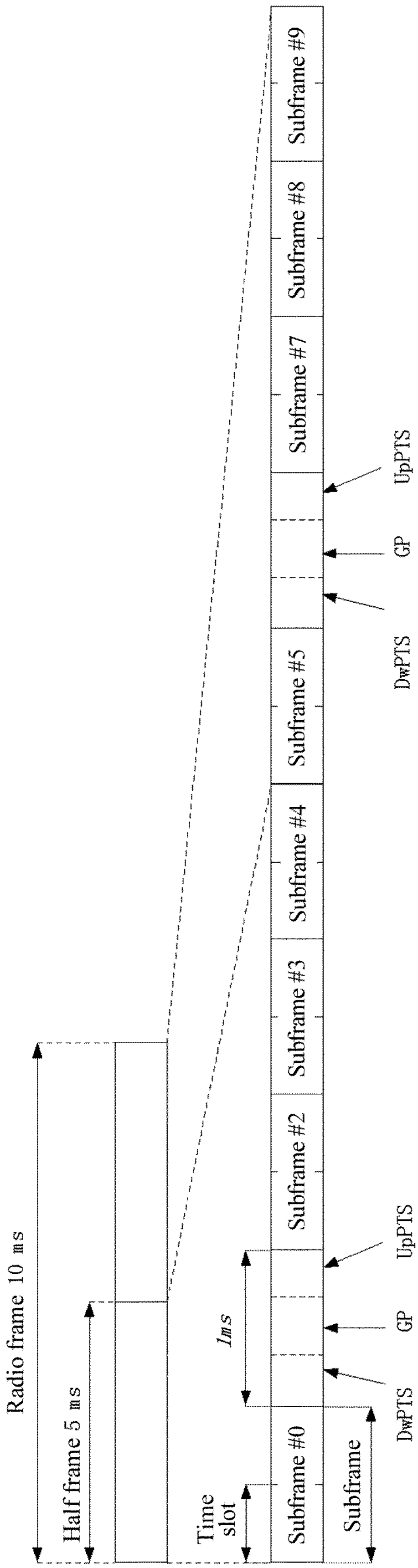
Radio frame 10 ms
Half frame 5 ms
Time slot
Subframe #0
Subframe
1ms
DwPTS
GP
UpPTS
Subframe #2
Subframe #3
Subframe #4
Subframe #5
DwPTS
GP
UpPTS
Subframe #7
Subframe #8
Subframe #9

FIG. 1

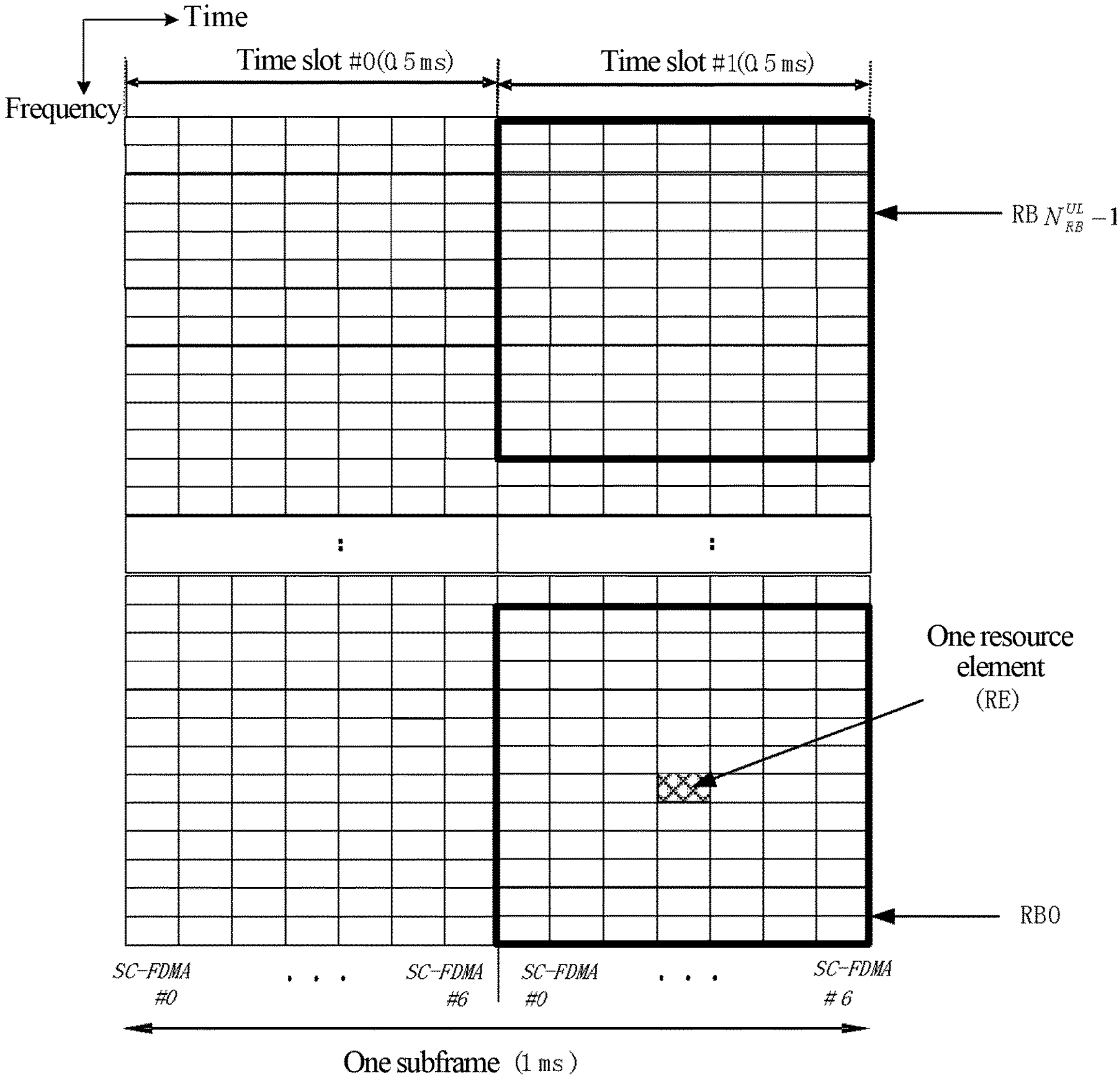
Time
Frequency
Time slot #0(0.5ms)
Time slot #1(0.5ms)
RB $N_{RB}^{UL}-1$
One resource element (RE)
RB0
SC-FDMA #0
SC-FDMA #6
SC-FDMA #0
SC-FDMA # 6
One subframe (1ms)

FIG. 2

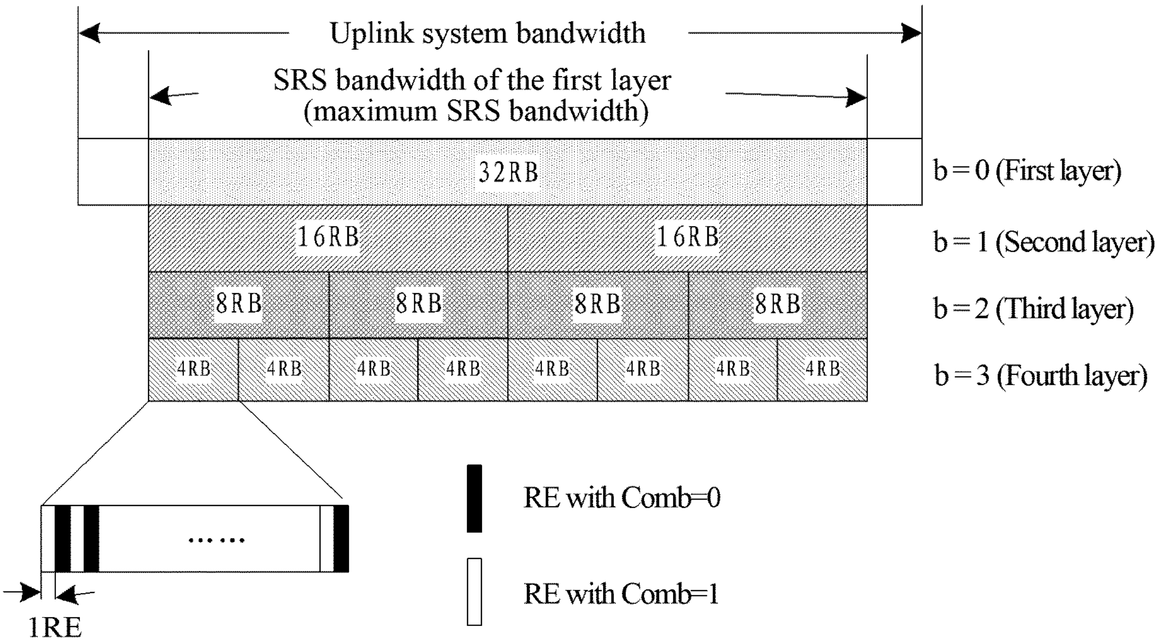


FIG. 3

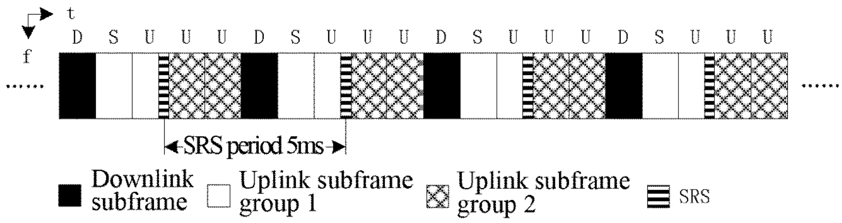


FIG. 4

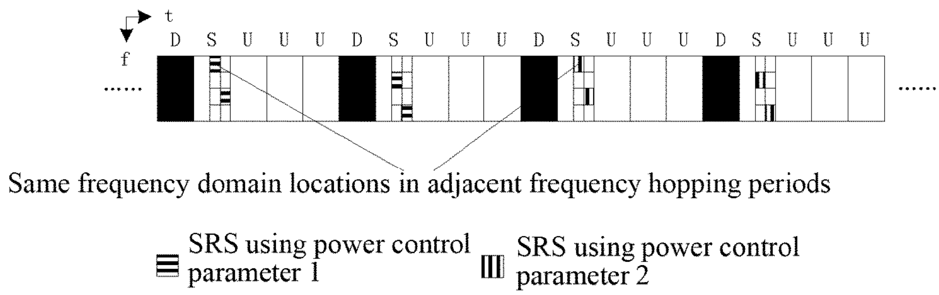


FIG. 5

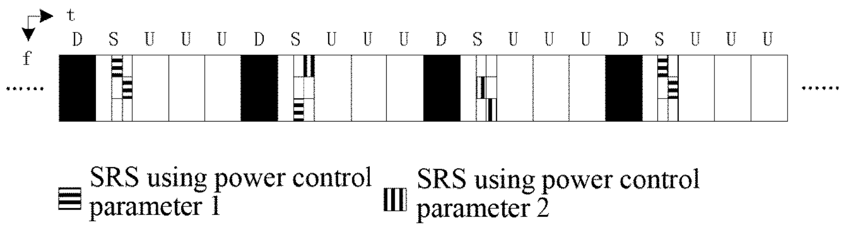


FIG. 6

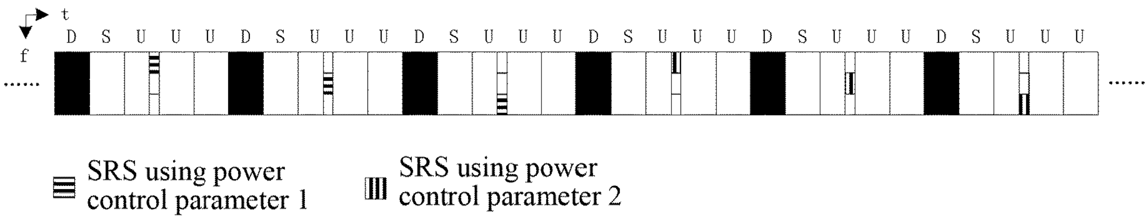


FIG. 7

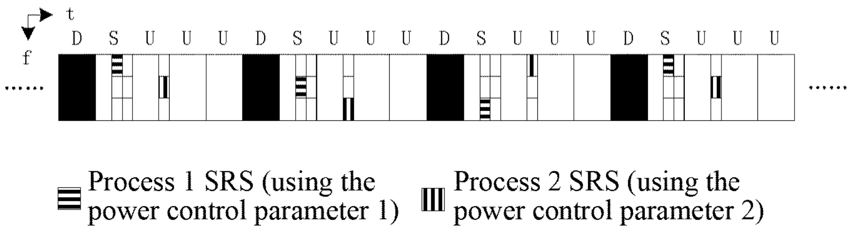


FIG. 8

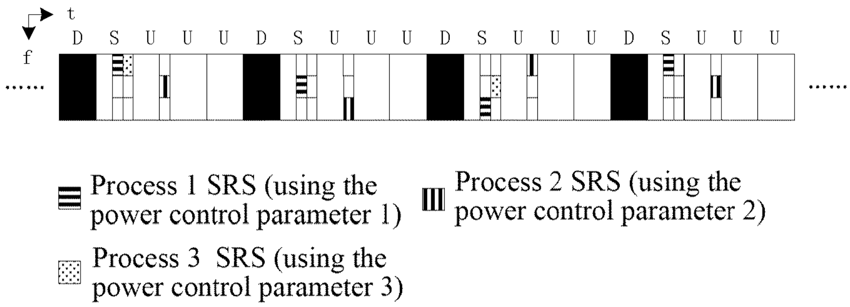


FIG. 9

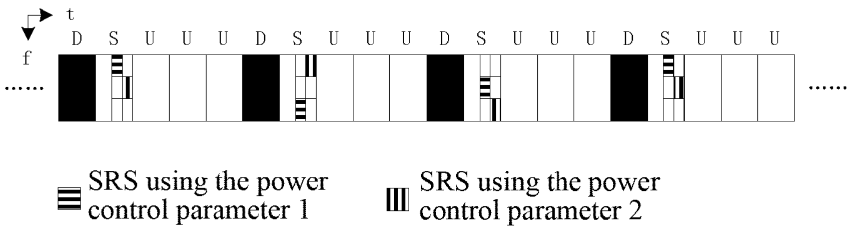


FIG. 10

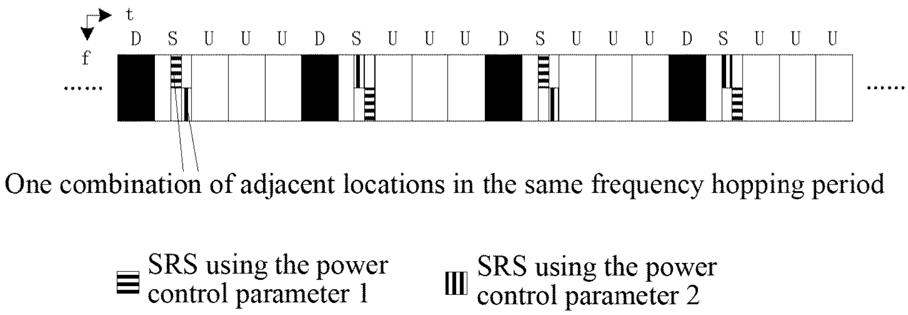


FIG. 11

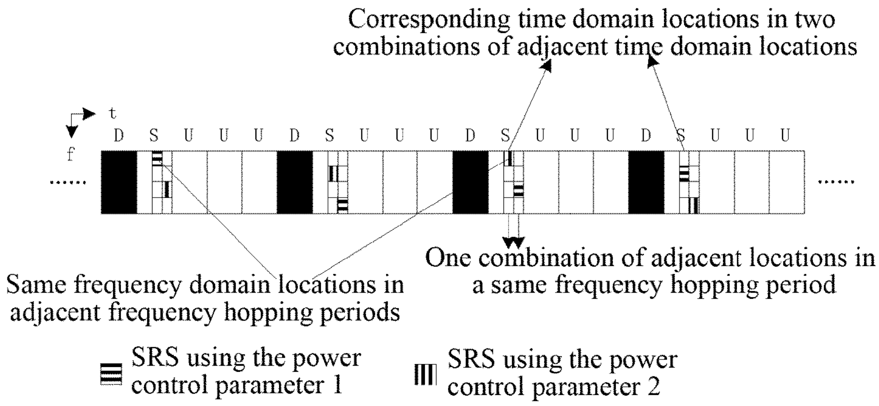


FIG. 12

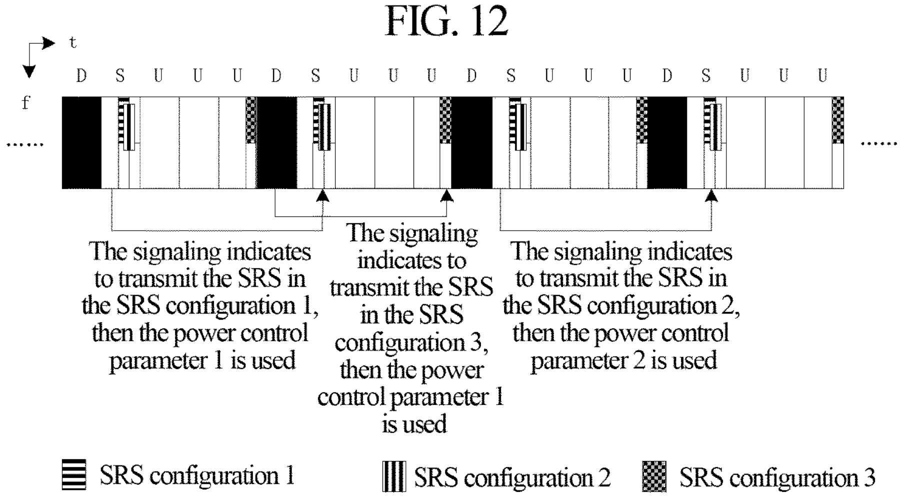


FIG. 13

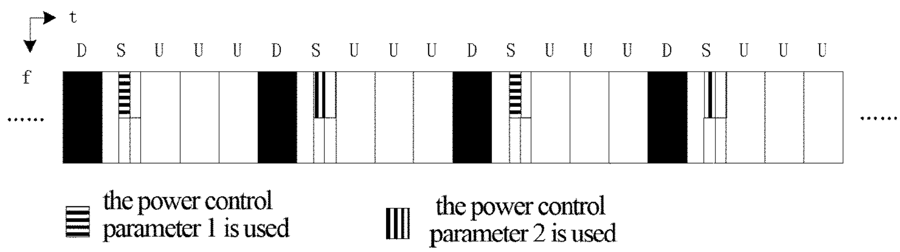


FIG. 14

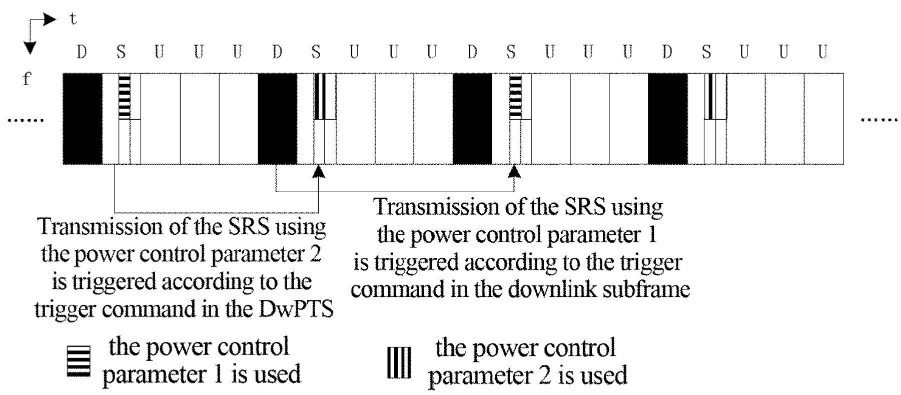


FIG. 15

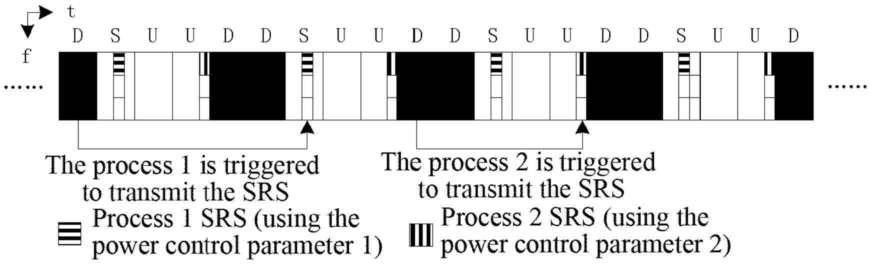


FIG. 16

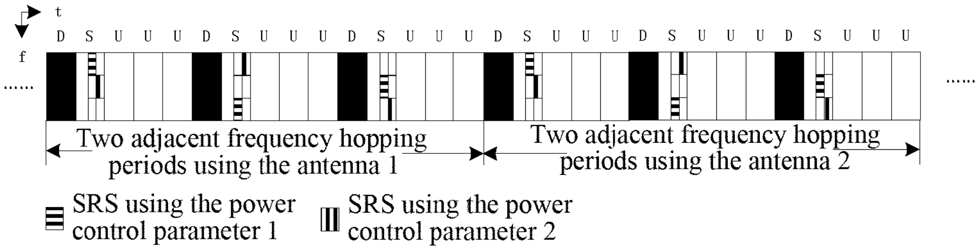


FIG. 17

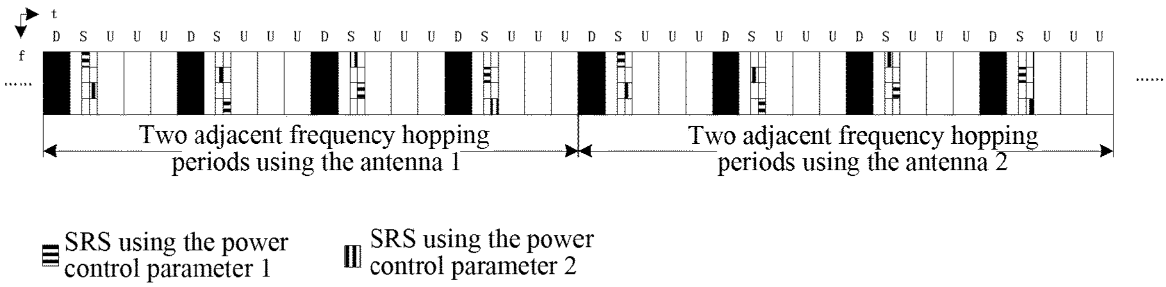


FIG. 18

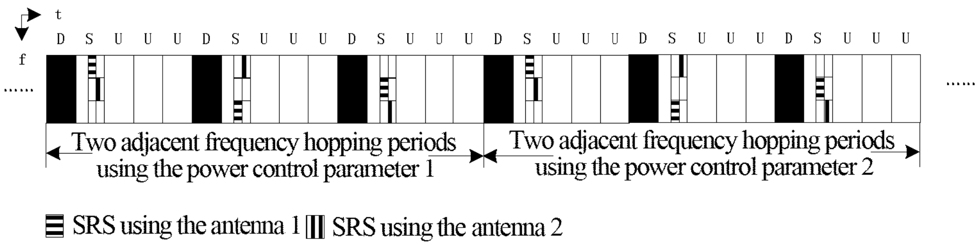


FIG. 19

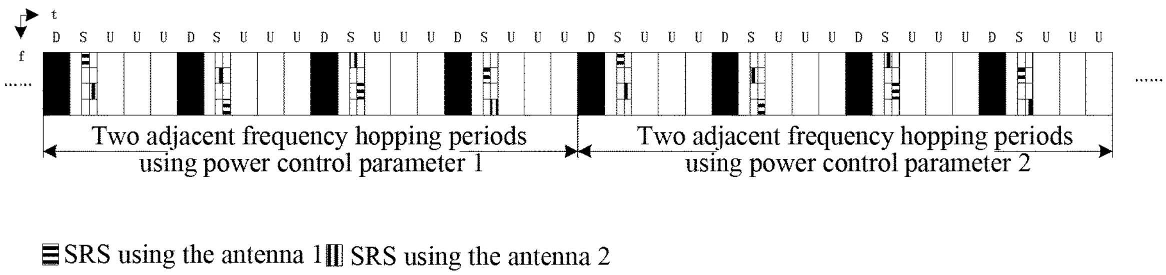


FIG. 20

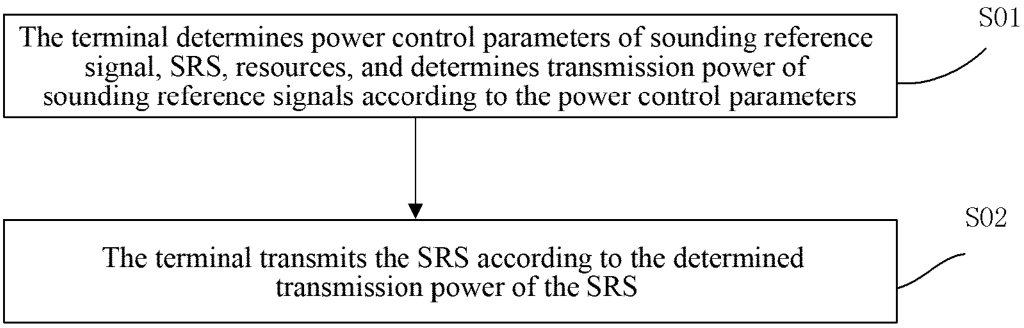


FIG. 21

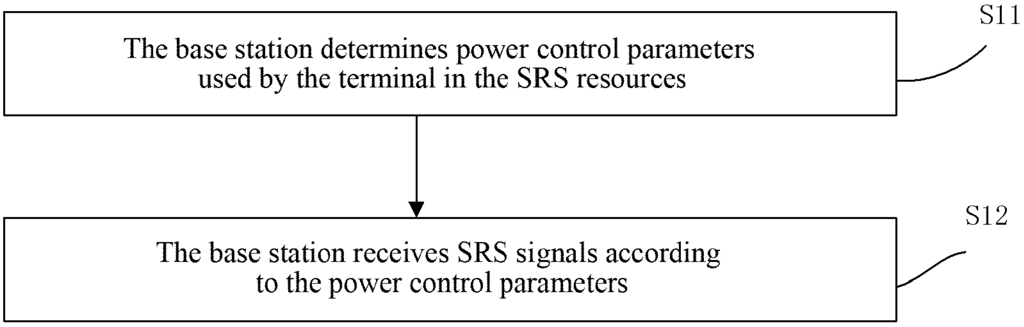


FIG. 22

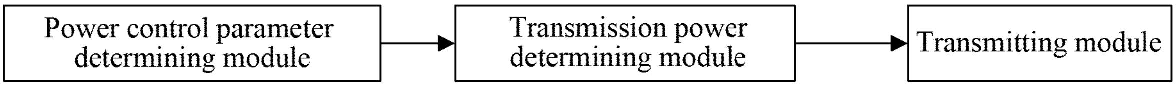


FIG. 23

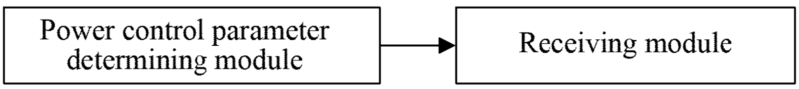


FIG. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011155711 A2